# EUROPÄISCHE PATENTSCHRIFT

(11) **EP 3 475 199 B1**
(45) Veröffentlichungstag und Bekanntmachung des Hinweises auf die Patenterteilung: **25.11.2020**
(21) Anmeldenummer: 17709597.3
(22) Anmeldetag: 21.02.2017
(51) Int. Cl.: B65G 47/08

(54) **VERFAHREN UND VORRICHTUNG ZUM UMGANG MIT IN MINDESTENS EINER REIHE HINTEREINANDER BEWEGTEN STUECKGUETERN**
METHOD AND DEVICE FOR HANDLING PIECE GOODS MOVED ONE AFTER THE OTHER IN AT LEAST ONE ROW
PROCÉDÉ ET DISPOSITIF DE MANUTENTION DE CHARGES ISOLÉES DÉPLACÉES LES UNES DERRIÈRE LES AUTRES EN AU MOINS UNE RANGÉE

(30) Priorität: 23.06.2016 DE 102016111539
(43) Veröffentlichungstag der Anmeldung: 01.05.2019
(73) Patentinhaber: KRONES Aktiengesellschaft, 93073 Neutraubling (DE)
(72) Erfinder: KIRZINGER, Johannes, 93073 Neutraubling (DE); KOLLMUSS, Manuel, 93073 Neutraubling (DE); WINZINGER, Frank, 93073 Neutraubling (DE)
(74) Vertreter: Benninger, Johannes
(86) Internationale Anmeldenummer: PCT/EP2017/053873
(87) Internationale Veröffentlichungsnummer: WO 2017/220215

(56) Entgegenhaltungen:
- EP-A2- 2 246 277
- WO-A1-2010/106529
- FR-A1- 2 993 870

## Beschreibung

Die vorliegende Erfindung betrifft ein Verfahren zum Umgang mit in mindestens einer Reihe hintereinander bewegten Stückgütern mit den Merkmalen des unabhängigen Verfahrensanspruchs 1. Zudem betrifft die Erfindung eine Vorrichtung zum Umgang mit in mindestens einer Reihe hintereinander bewegten Stückgütern mit den Merkmalen des unabhängigen Vorrichtungsanspruchs 10.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle kommt zudem dem Reibwiderstand zwischen dem jeweiligen Förder- oder Transportband und der Unterseite des jeweiligen Stückgutes zu, was dazu führen kann, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein soll, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Das Dokument FR 2993870 A1 beschreibt ein Verfahren nach dem Oberbegriff des Anspruchs 1 und eine Vorrichtung, die Einlasskanäle zur Aufnahme von aufeinanderfolgenden Objekten aufweist. Weiterhin umfasst die Vorrichtung Auslasskanäle zum Austragen der Objekte, wobei sich die Anzahl der Einlasskanäle von der Anzahl der Auslasskanäle unterscheidet. Ein Roboter ist mit einem Greifkopf zum Ergreifen einer Charge von beförderten Objekten versehen, wobei der Greifkopf an einem Steuerteil angebracht ist, um die Freigabe der Objekte zu steuern. Der Roboter bewegt den Greifkopf zwischen den Einlasskanälen und den Auslasskanälen.

Das Dokument WO 2010/106529 offenbart einen Greifkopf mit einem Trägerelement, das um eine erste Drehachse drehbar ist und an dem zwei oder mehr Greifer schwenkbar angeordnet sind. Jeder der Greifer ist um eine Symmetrieachse drehbar, wobei die Drehachsen parallel zueinander sind und die Drehbewegung der Greifer unabhängig voneinander sind.

Die EP 2246277 A2 beschreibt eine Vorrichtung und ein Verfahren zum definierten Zusammenführen von Gebinden. Die Gebinde werden Stoß an Stoß auf mindestens einem Abförderer der weiteren Verarbeitung bzw. Handhabung zugeführt.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Darüber hinaus besteht ein weiteres Ziel der vorliegenden Erfindung darin, die Auslenkungen und Bewegungsfahrten der jeweils zur Lagenbildung verwendeten Handhabungssysteme zu reduzieren, was bei den normalerweise mit hohen Geschwindigkeiten und entsprechend kurzen Stellzeiten arbeitenden Handhabungssystemen bzw. Handhabungsrobotern zu reduzierten mechanischen und Bauteilbelastungen beitragen kann.

Das Verfahren soll die Verarbeitung von Stückgütern ermöglichen, die in mindestens einer Reihe befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren und einer Vorrichtung zum Umgang mit in mindestens einer Reihe hintereinander bewegten Stückgütern erreicht, welche die Merkmale der unabhängigen Patentansprüche 1 und 10 umfassen. Merkmale vorteilhafter Weiterbildungen der Erfindung ergeben sich aus den jeweiligen abhängigen Ansprüchen.

Die Erfindung bezieht sich auf ein Verfahren und eine Vorrichtung bzw. Handhabungsvorrichtung zum Umgang mit in mindestens einer Reihe hintereinander bewegten Stückgütern. Wenn daher im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander bewegten Stückgütern gemeint. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit in mindestens einer Reihe hintereinander bewegten Stückgütern gemeint. Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in Reihe hintereinander bewegten Stückgüter können dabei je nach Anforderung von nachfolgenden Handhabungsvorrichtungen gleich oder unterschiedlich ausgebildet sein.

Die in einer Reihe ohne Abstände oder mit minimalen Abständen bewegten und/oder zu einem - insbesondere Manipulationsbereich bzw. Erfassungsbereich genannten - Bereich beförderten, mindestens zwei unmittelbar aufeinanderfolgenden Stückgüter werden insbesondere als geschlossene Formation transportiert. Mit dem Begriff der geschlossenen Formation ist eine weitgehend lückenlose Aufeinanderfolge von Stückgütern gemeint, die in einer Reihe hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. In der geschlossenen Formation können die Stückgüter insbesondere Stoß an Stoß transportiert werden. Dies wird beispielsweise durch einen einmalig aufgebrachten Staudruck von hinten versursacht. Der Staudruck wird dabei vorzugsweise vor oder kurz vor dem Erfassungsbereich des mindestens einen Manipulators der Handhabungsvorrichtung erzeugt. Alternativ kann vorgesehen sein, dass andauernd zumindest ein leichter Staudruck von hinten auf die Stückgüter einwirkt.

Aus der jeweils geschlossenen Formation werden in einem ersten Manipulations- oder Verfahrensschritt im Erfassungsbereich eines Manipulators wenigstens zwei transportierte Stückgüter klemmend und/oder kraftschlüssig und/oder formschlüssig erfasst, in einem zweiten Manipulations- oder Verfahrensschritt von der geschlossenen Formation räumlich abgetrennt und in einem dritten Manipulations- oder Verfahrensschritt in eine definierte relative erste Zielposition und/oder Zielausrichtung gegenüber nachfolgenden Stückgütern der Formation gebracht.

Das klemmende Erfassen der mindestens zwei Stückgüter erfolgt vorzugsweise mittels Klemm- und/oder Greifmitteln des wenigstens eines Manipulators. Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein.

Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

In der erreichten ersten Zielposition und/oder Zielausrichtung wird mindestens eines der mindestens zwei in die erste Zielposition und/oder Zielausrichtung überführten Stückgüter in einem vierten Manipulations- oder Verfahrensschritt von den Klemm- und/oder Greifmitteln des Manipulators freigegeben und verbleibt vorzugsweise in dieser definierten relativen ersten Zielposition und/oder Zielausrichtung. Das Verbleiben der Stückgüter in der Zielposition und/oder Zielausrichtung bezieht sich insbesondere relativ zu der Auflagefläche der Zielposition. Bewegt sich diese Auflagefläche, so wird das Stückgut entsprechend weiterbefördert.

Anschließend wird das mindestens eine zweite Stückgut der wenigstens zwei im ersten Manipulations- oder Verfahrensschritt erfassten Stückgüter in einem fünften Manipulations- oder Verfahrensschritt mittels der weiterhin oder erneut aktivierten Klemm- und/oder Greifmittel des Manipulators erfasst und in einem sechsten Manipulations- oder Verfahrensschritt unter Abtrennung von dem wenigstens einen ersten, in der ersten Zielposition verbleibenden Stückgut in eine definierte relative zweite Zielposition und/oder Zielausrichtung verbracht. Durch die Abtrennung von dem in der ersten Zielposition verbleibenden mindestens einen Stückgut ergibt sich zwangsläufig, dass die zweite Zielposition und/oder Zielausrichtung beabstandet zu der ersten Zielposition ist.

Die zuvor beschriebenen Manipulationsschritte, d.h. die ersten, zweiten, dritten, vierten, fünften und sechsten Schritte, sind nicht nur so zu verstehen, dass es sich um voneinander abgrenzbare und voneinander unterscheidbare Manipulationsschritte handelt, sondern dass diese Manipulationsschritte in der Reihenfolge, in der sie oben genannt wurden, aufeinanderfolgend ablaufen.

Werden beispielsweise im ersten Manipulations- oder Verfahrensschritt drei Stückgüter vom Manipulator erfasst, so können im vierten Manipulations- oder Verfahrensschritt zwei der Stückgüter in der ersten Zielposition und/oder Zielausrichtung freigegeben werden und anschließend nur das verbleibende einzelne Stückgut in die zweite Zielposition und/oder Zielausrichtung verbracht werden. Alternativ kann im vierten Manipulations- oder Verfahrensschritt nur eines der Stückgüter in der ersten Zielposition und/oder Zielausrichtung freigegeben werden und anschließend werden die verbleibenden zwei Stückgüter in die zweite Zielposition und/oder Zielausrichtung verbracht. Eine weitere Ausführungsform kann vorsehen, dass in einem anschließenden siebten Manipulations- oder Verfahrensschritt wiederum eines der zwei in die zweite Zielposition überführten Stückgüter erfasst und in einem achten Manipulations- oder Verfahrensschritt in eine definierte relative dritte Zielposition und/oder Zielausrichtung verbracht wird.

Gemäß einer bevorzugten Ausführungsform der Erfindung ist vorgesehen, dass die in dem ersten Manipulations- oder Verfahrensschritt jeweils von den Klemm- und/oder Greifmitteln des Manipulators erfassten mindestens zwei Stückgüter durch eine Bewegung in linearer Richtung parallel oder schräg zu einer ursprünglichen Transportrichtung der geschlossenen Formation bewegt werden. Beispielsweise können die mindestens zwei Stückgüter durch eine Bewegung in linearer Richtung in die erste Zielposition und/oder Zielausrichtung gelangen, so dass das in der ersten Zielposition verbleibende mindestens eine Stückgut und eine Transportrichtung der geschlossenen Formation miteinander fluchten. Hierbei behält das mindestens eine Stückgut zudem die Ausrichtung bei, die es auch ursprünglich in der Formation eingenommen hatte.

Weiterhin kann vorgesehen sein, dass die in dem ersten Manipulations- oder Verfahrensschritt erfassten mindestens zwei Stückgüter mit oder ohne überlagerte Rotation um einen Drehwinkel von 90° bis 270° in die erste Zielposition und/oder Zielausrichtung gelangen. Beispielsweise werden die mindestens zwei Stückgüter von der geschlossenen Formation durch seitliche Rotation aus einer geradlinigen Bewegungsbahn der geschlossenen Formation jeweils räumlich abgetrennt und in die jeweilige definierte erste relative Zielposition und/oder Zielausrichtung gegenüber nachfolgenden Stückgütern der Formation gebracht. Unter seitlicher Rotation versteht man insbesondere eine Kombination aus einer Drehung der erfassten Stückgüter in Verbindung mit einer seitlichen oder schrägen Verschiebungskomponente. Die Verschiebungskomponente weist einen definierten Winkel ungleich Null zur Transportrichtung der Stückgüter der Formation auf. Die Verschiebungskomponente bewirkt insbesondere, dass die mindestens zwei Stückgüter in ihrer Zielposition und/oder Zielausrichtung nicht in einer Flucht zu den Stückgütern der Formation angeordnet sind.

Anschließend kann bspw. mindestens eines der vom Manipulator erfassten Stückgüter in unmittelbarer Folge von dieser ersten Zielposition erneut abgegriffen und durch eine weitere Bewegung in linearer Richtung parallel oder schräg zur ursprünglichen Transportrichtung und mit oder ohne überlagerte Rotation um einen Drehwinkel von 90° bis 270° in die zweite Zielposition und/oder Zielausrichtung gelangen. Insbesondere wird resultierend aus den in zeitlich aufeinanderfolgenden Schritten in ihre jeweilige Zielposition und/oder Zielausrichtung gebrachten Stückgütern eine palettierfähige Lage bzw. Lagenanordnung oder eine Vorgruppierung für eine palettierfähige Lage bzw. Lagenanordnung gebildet.

Wenn von einer Rotation der Stückgüter die Rede ist, so kann es sich bevorzugt um eine Rotation um eine vertikale Achse handeln, insbesondere vertikal zu der durch die Transporteinrichtung und/oder Horizontalfördereinrichtung gebildeten Transportebene der Stückgüter. Die Achse muss nicht zwangsweise den Schwerpunkt eines Stückguts schneiden, sondern kann auch außermittig liegen, insbesondere dann, wenn mehrere Stückgüter gleichzeitig rotieren. Vorzugsweise rotieren immer alle gleichzeitig durch den Manipulator gegriffenen Stückgüter um dieselbe Achse.

Das Verfahren kann in vorteilhafter Weise realisiert werden, indem die Manipulationsschritte zur Erfassung und Positionierung der Stückgüter über einen bestimmten und vorzugsweise als Deltakinematik- Roboter oder Parallelkinematik-Roboter ausgebildeten Manipulator oder einen Teil eines Deltakinematik-Roboters oder Parallelkinematik-Roboter bildenden Manipulators umgesetzt werden.

Eine weitere Option des erfindungsgemäßen Verfahrens kann zudem vorsehen, dass nach Freigabe eines Stückgutes in der ersten Zielposition oder nach Freigabe von zwei oder mehr Stückgütern in der ersten Zielposition deren Verschiebung mittels noch im Manipulator befindlichen Stückgütern in Richtung einer von der ersten Zielposition abweichenden bzw. beabstandeten Zielposition erfolgen kann, bevor diese im Manipulator befindlichen weiteren Stückgüter in die vorgesehene zweite Zielposition gebracht werden.

Gemäß einer bevorzugten Ausführungsform der Erfindung ist vorgesehen, dass benachbarte Bereiche der Klemm- und/oder Greifmittel des Manipulators zwei oder mehr hintereinander transportierte Stückgüter von der geschlossenen Formation erfassen und bewegen, wobei die Klemm- und/oder Greifmittel zur selektiven Freigabe einzelner Stückgüter an definierten Zielpositionen unter gleichzeitiger Aufrechterhaltung der Erfassung und/oder Klemmung mindestens eines benachbarten Stückgutes ausgebildet sind. Weiterhin kann in diesem Zusammenhang vorgesehen sein, dass die Klemm- und/oder Greifmittel zur Beförderung in mindestens eine weitere, von der ersten Zielposition beabstandete zweite Zielposition jeweils unterschiedlich angesteuert, aktiviert und/oder bewegt werden. Dies wird insbesondere im Zusammenhang mit der erfindungsgemäßen Vorrichtung näher dargestellt.

Eine Variante des erfindungsgemäßen Verfahrens kann vorsehen, dass der Erfassungsbereich des Manipulators und/oder der Manipulator mittels wenigstens eines nachfolgend im Rahmen der Vorrichtung näher beschriebenen Sensors erfasst und überwacht wird. Diese Sensorüberwachung kann insbesondere zur exakteren Steuerung der unterschiedlichen Segmente des Manipulators im Zusammenhang mit der selektiven Freigabe und Positionierung einzelner oder mehrerer dort zuvor erfasster Stückgüter vorgesehen sein.

Weiterhin ist denkbar, dass mindestens ein in einem ersten Schritt mittels des Manipulators bereits erfasstes und in eine erste Position bzw. Zwischenposition gebrachtes Stückgut durch erneutes Erfassen mittels des Manipulators in die definierte Zielposition und/oder Zielausrichtung gebracht wird. Die von dem Stückgut zuerst eingenommene Position stellt somit nicht die finale Zielposition innerhalb der zu bildenden Teillage bzw. Palettenlage dar. Die Zielposition wird erst in einem späteren Verfahrensschritt endgültig hergestellt. Analog ist denkbar, dass mindestens ein in einem ersten Schritt durch Verschieben mittels eines weiteren Stückgutes in die erste Position bzw. Zwischenposition gebrachtes Stückgut durch Erfassen mittels des Manipulators im Rahmen eines weiteren Verfahrensschrittes in die definierte Zielposition und/oder Zielausrichtung gebracht wird.

Bei dem erfindungsgemäßen Verfahren kann weiterhin vorgesehen sein, dass den erfassten Stückgütern, insbesondere dem wenigstens einen ersten erfassten Stückgut und dem mindestens einen zweiten Stückgut, gegenüber einer Transportgeschwindigkeit der geschlossenen Formation wenigstens eine Geschwindigkeitskomponente aufgeprägt wird. Hierbei ist zu beachten, dass die Geschwindigkeitskomponente nicht negativ gegenüber der Geschwindigkeit der Stückgüter in der Formation sein darf. Bei einer negativen Geschwindigkeitskomponente würden das wenigstens eine erfasste Stückgut entgegen der Transportrichtung der Transporteinrichtung und/oder der Horizontalfördereinrichtung transportiert werden, was zu einer Kollision zwischen dem wenigstens einen erfassten Stückgut und dem nachfolgenden, nunmehr zuvorderst befindlichen Stückgut der geschlossenen Formation führen würde.

Weiterhin kann bei dem erfindungsgemäßen Verfahren den im ersten Verfahrensschritt mindestens zwei erfassten Stückgütern eine Richtungs- und/oder Drehbewegungskomponente aufgeprägt werden. Hierbei ist zu beachten, dass die Richtungskomponente nicht entgegen der Transportrichtung der Stückgüter in der Formation gerichtet sein darf. Ansonsten bestünde eine Kollisionsgefahr zwischen dem erfassten Stückgut und dem nachfolgenden, nunmehr zuvorderst befindlichen Stückgut der geschlossenen Formation. Zum Drehen des mindestens einen erfassten Stückgutes kann der Manipulator der Vorrichtung beispielsweise als Greiferkopf an einem Drehgelenk ausgebildet sein und durch Rotation um einen definierten Winkel von beispielsweise 90°, 180° oder 270° die Ausrichtung der zwischen den Klemm- und/oder Greifmitteln, beispielsweise Klemmbacken, erfassten Stückgüter verändern.

In weiteren zeitlich aufeinander folgenden Manipulations- oder Verfahrensschritten werden vorzugsweise mehrmals wenigstens ein transportiertes Stückgut aus der geschlossenen Formation klemmend und/oder kraft- und/oder formschlüssig erfasst, von der geschlossenen Formation räumlich abgetrennt und in eine jeweilige definierte relative Zielposition und/oder Zielausrichtung gegenüber nachfolgenden Stückgütern gebracht, woraus resultierend aus mehreren Stückgütern eine Gruppierung für eine palettierfähige Lage oder Teillage gebildet wird. Insbesondere werden in weiteren zeitlich aufeinander folgenden Verfahrensschritten mehrmals wenigstens zwei vom Manipulator zeitgleich erfasste Stückgüter aus der geschlossenen Formation klemmend und/oder kraft- und/oder formschlüssig erfasst, von der geschlossenen Formation räumlich abgetrennt und in eine jeweilige definierte relative erste Zielposition und/oder Zielausrichtung gegenüber nachfolgenden Stückgütern gebracht, wobei im Anschluss daran mindestens eines der mindestens zwei Stückgüter in eine beabstandete zweite Zielposition verbracht werden kann.

Eine weitere Ausführungsform des Verfahrens sieht vor, dass mindestens zwei Stückgüter aus der geschlossenen Formation klemmend und/oder kraft- und/oder formschlüssig erfasst, von der geschlossenen Formation räumlich abgetrennt und in eine jeweilige definierte erste Zielposition und/oder Zielausrichtung gegenüber nachfolgenden Stückgütern gebracht werden. In einem anschließenden Verfahrensschritt wird mindestens eines der mindestens zwei Stückgüter in der ersten Zielposition und / oder Ausrichtung angeordneten Stückgüter erneut klemmend erfasst und in eine zweite Zielposition und / oder Zielausrichtung bewegt und/oder gedreht, während das mindestens eine andere der mindestens zwei Stückgüter durch Kontakt lediglich von einer Seite her, also nicht klemmend, durch den Manipulator oder durch andere Stückgüter in eine dritte Zielposition und / oder Zielausrichtung bewegt wird.

Der beschriebene Verfahrensschritt bzw. die zuvor beschriebenen Verfahrensschritte oder auch einzelne der zuvor beschriebenen Verfahrensschritte erfolgen insbesondere mittels einer erfindungsgemäßen Vorrichtung, insbesondere mittels einer Handhabungsvorrichtung, die dem Umgang mit in mindestens einer Reihe von hintereinander bewegten Stückgütern dient/dienen, welche Vorrichtung wenigstens eine erste Transporteinrichtung und mindestens einen Manipulator umfasst. Die wenigstens eine erste Transporteinrichtung dient der Zuführung der in einer Reihe zueinander unmittelbar aufeinanderfolgenden, insbesondere annähernd ohne Beabstandung als geschlossene Formation angeordneten bzw. bewegten, Stückgüter zu einem Erfassungsbereich des mindestens einen Manipulators. Bei der ersten Transporteinrichtung handelt es sich beispielsweise um einen Horizontalförderer, insbesondere ein Horizontalförderband. Von der ersten Transporteinrichtung gelangen die Stückgüter auf eine weitere, insbesondere fluchtende Horizontalfördereinrichtung, auf welcher sie durch den Manipulator der Handhabungsvorrichtung innerhalb seines Erfassungsbereiches erfasst und insbesondere auch freigegeben werden. Die Horizontalfördereinrichtung und der Manipulator bilden insbesondere das Gruppiermodul der Handhabungsvorrichtung mit dem Erfassungsbereich, in dem die jeweiligen Stückgüter durch den Manipulator erfasst und insbesondere auch freigegeben werden.

Der mindestens eine Manipulator ist typischerweise / vorzugsweise zum klemmenden und/oder formschlüssigen und/oder kraftschlüssigen Erfassen und/oder Entgegennehmen mindestens zweier Stückgüter aus der mittels der wenigstens einen Transporteinrichtung in den Erfassungsbereich des Manipulators transportieren geschlossenen Formation ausgebildet. Weiterhin ist der Manipulator zum Abtrennen und selektiven Überführen der Stückgüter in mindestens zwei voneinander beabstandete unterschiedliche Zielpositionen und/oder Zielausrichtungen ausgebildet. Insbesondere ist der Manipulator zum selektiven Überführen wenigstens eines ersten Stückgutes in eine erste Zielpositionen und/oder Zielausrichtung und zum selektiven Überführen wenigstens eines zweiten Stückgutes in eine zweite Zielpositionen und/oder Zielausrichtung ausgebildet.

Gemäß einer Ausführungsform können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter parallel zur Transportrichtung der zulaufenden Stückgüter ausgerichtet.

Die Stückgüter werden nach Verbringen in ihre jeweilige definierte Zielposition mittels der mindestens zwei sich gegenüberliegenden Klemm- und/oder Greifmittel freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Deltakinematik-Roboter bzw. sog. Tripode ausgebildet sind.

Um selektiv einzelne Stückgüter oder Teilgruppen einer gemeinsam erfassten Gesamtgruppe von Stückgütern in ihre jeweiligen Zielpositionen und/oder Zielausrichtungen überführen zu können, sind die Klemm- und/oder Greifmittel des Manipulators vorzugsweise derart ausgebildet, dass benachbarte Bereiche der Klemm- und/oder Greifmittel selektiv einzelne Stückgüter an definierten Zielpositionen freigeben können. Hierbei wird gleichzeitig die Erfassung und/oder Klemmung mindestens eines benachbarten Stückgutes aufrechterhalten, um dieses anschließend in mindestens eine weitere, von der ersten Zielposition beabstandete zweite Zielposition zu überführen. Dies wird insbesondere dadurch erreicht, dass die benachbarten Bereiche der Klemm- und/oder Greifmittel jeweils unterschiedlich ansteuerbar, aktivierbar und/oder bewegbar sind.

Vorzugsweise sind die Klemm- und/oder Greifmittel in wenigstens zwei separat ansteuerbare Abschnitte zur klemmenden, form- und/oder kraftschlüssigen Erfassung und/oder zur selektiven Freigabe wenigstens zweier benachbarter Stückgüter unterteilt. Insbesondere kann jedem der unterschiedlichen Klemmbereiche der Klemm- und/oder Greifmittel jeweils ein eigener Antrieb, beispielsweise ein Servomotor, zugeordnet sein. Gemäß einer alternativen Ausführungsform können die Antriebe der Klemm- und/oder Greifmittel abhängig voneinander ansteuerbar sein. In diesem Fall wäre es denkbar, dass mehrere Stückgüter in bzw. bei Erreichen einer ersten Zielposition freigegeben werden. Nach Freigabe kann der Manipulator bzw. die mindestens eine Klemm- und/oder Greifeinrichtung wenigstens eines der bei Erreichen der ersten Zielposition freigegebenes Stückgut nochmals entgegennehmen und zeitlich nach Entgegennahme in Richtung der zweiten Zielposition bewegen. Dies kann beispielsweise durch ein zwischenzeitliches (zwischen Abgabe und erneuter Aufnahme) Verschieben des Manipulators relativ zu den in der ersten Zielposition freigegebenen Stückgütern geschehen.

Der Manipulator kann insbesondere zum einreihigen oder mehrreihigen Abgreifen von Stückgütern ausgebildet sein. Hierfür können die Klemm- und/oder Greifmittel entweder einreihig oder mehrreihig angeordnet sein. Innerhalb einer Reihe können dabei die Klemm- und/oder Greifmittel zusätzlich separat ansteuerbare Greifbereiche ausgebildet haben. Es ist beispielsweise denkbar, dass die Stückgüter auf mehreren ersten Transporteinrichtungen in parallelen Reihen bzw. Bahnen angefördert werden. In diesem Fall können die Klemm- und/oder Greifmittel des Manipulators dergestalt ausgebildet sein, dass diese insbesondere gleichzeitig mehrere parallele Reihen von Stückgütern abgreifen können. Hierbei muss insbesondere berücksichtigt werden, ob zwischen den Parallelreihen an einlaufenden Stückgütern jeweils ein Abstand ausgebildet ist oder nicht. Der Manipulator kann beispielsweise zwei Reihen paralleler Klemm- und/oder Greifmittel aufweisen, welche über einen gemeinsamen oder unabhängig voneinander über zwei Antriebe zum Erfassen der Stückgüter ansteuerbar sind.

Gemäß einer Ausführungsform ist dem Erfassungsbereich und/oder dem Manipulator wenigstens ein Sensor zur Erfassung und Überwachung der selektiven Ansteuerung, Aktivierung und/oder Bewegung der Klemm- und/oder Greifmittel des Manipulators zugeordnet. Der Sensor kann beispielsweise durch einen optischen Sensor, insbesondere durch eine Kamera mit nachgeschalteter Bildauswertung gebildet sein. Grundsätzlich können jedoch auch andere Sensorvarianten zum Einsatz kommen, so bspw. Ultraschallsensoren o. dgl.

Die Steuerung des Manipulators und weiterer Maschinenbauteile der Vorrichtung erfolgt erfindungsgemäß über eine Steuerungseinrichtung der Vorrichtung oder Handhabungsvorrichtung. Insbesondere steuert diese den mindestens einen Manipulator zum klemmenden und/oder kraft- und/oder formschlüssigen Erfassen der mindestens zwei Stückgüter, zu deren räumlicher Abtrennung von der geschlossenen Formation sowie zum Bringen mindestens eines Stückgutes in die erste definierte Zielposition und/oder Zielausrichtung und zum Bringen mindestens eines weiteren Stückgutes in die von der ersten Zielposition beabstandete zweite definierte Zielposition und/oder Zielausrichtung. Vorzugsweise enthält die Steuerungseinrichtung abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Bei der Steuerungseinrichtung kann es sich insbesondere um eine elektronische und/oder programmierbare Steuerungseinrichtung wie beispielsweise eine SPS handeln. In dieser können unterschiedliche Rezepte / Daten abgelegt sein, mit welchen jeweils unterschiedliche Stückgüter - beispielsweise Sechser- Gebinde und Vierer- Gebinde - geklemmt, freigegeben und/oder realisiert werden können. Die Steuerungseinrichtung kann insbesondere folgende Rezepte / Daten enthalten:
- unterschiedliche Zielpositionen und/oder Zielausrichtungen, insbesondere ob die Stückgüter mit Rotation oder ohne Rotation in die Zielpositionen und/oder Zielausrichtungen gelangen und/oder
- Informationen zum Ziel- Lagenschema, d.h. Anordnung der Stückgüter in Relation zueinander in der jeweiligen Ziellage und/oder
- Anzahl der Formationen im Zulauf der Vorrichtung, insbesondere einreihiger oder mehrreihiger Zulauf von Stückgütern etc.

Der Manipulator ist über die Steuerungseinrichtung derart ansteuerbar, dass die mindestens eine Klemm- und/oder Greifeinrichtung mit den Klemm- und/oder Greifmitteln die mindestens zwei unterschiedlichen Zielpositionen zeitversetzt, insbesondere nacheinander, anfährt und bei Erreichen einer jeweiligen der mindestens zwei unterschiedlichen Positionen jeweils mindestens eines der von der Formation abgegriffenen Stückgüter freigibt. Die mindestens zwei Stückgüter werden vorzugsweise im Rahmen einer kontinuierlichen Arbeitsbewegung der Klemm- und/oder Greifmittel zeitversetzt manipuliert, wodurch ein hoher Durchsatz erzielt werden kann.

Die Vorrichtung kann alternativ oder zusätzlich zu den beschriebenen Merkmalen ein oder mehrere Merkmale und / oder Eigenschaften des zuvor beschriebenen Verfahrens umfassen. Ebenfalls kann das Verfahren alternativ oder zusätzlich einzelne oder mehrere Merkmale und / oder Eigenschaften der beschriebenen Vorrichtung aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt schematisch die Zusammenstellung von Stückgütern als Lage.
Figuren 2A bis 2C zeigen jeweils das Erfassen einer unterschiedlichen Anzahl von Stückgütern durch einen Manipulator der Handhabungsvorrichtung.
Figuren 3 bis 32 zeigen schematisch einen zeitlichen Ablauf eines erfindungsgemäßen Verfahrens zum Umgang mit in zwei parallelen Reihen hintereinander bewegten Stückgütern durch eine entsprechende Handhabungsvorrichtung zum Vorbereiten einer Lage von Stückgütern gemäß Figur 1.
Figur 33 zeigt eine schematische Perspektivansicht einer Ausführungsform einer Handhabungs- und/oder Manipulationsvorrichtung zur Durchführung einer Variante oder mehrerer Varianten des erfindungsgemäßen Verfahrens.
Figur 34 zeigt eine schematische Detailansicht eines unteren Teils der Vorrichtung aus Figur 33.
Figur 35 zeigt eine schematische Querschnittsdarstellung durch die Vorrichtung aus dem Ausführungsbeispiel gemäß Figur 33 und Figur 34.
Figur 36 zeigt schematisch eine Unterteilung eines Manipulators der Handhabungsvorrichtung.

Für gleiche oder gleich wirkende Elemente der Erfindung werden jeweils identische Bezugszeichen verwendet. Ferner werden der Übersicht halber nur Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung dar.

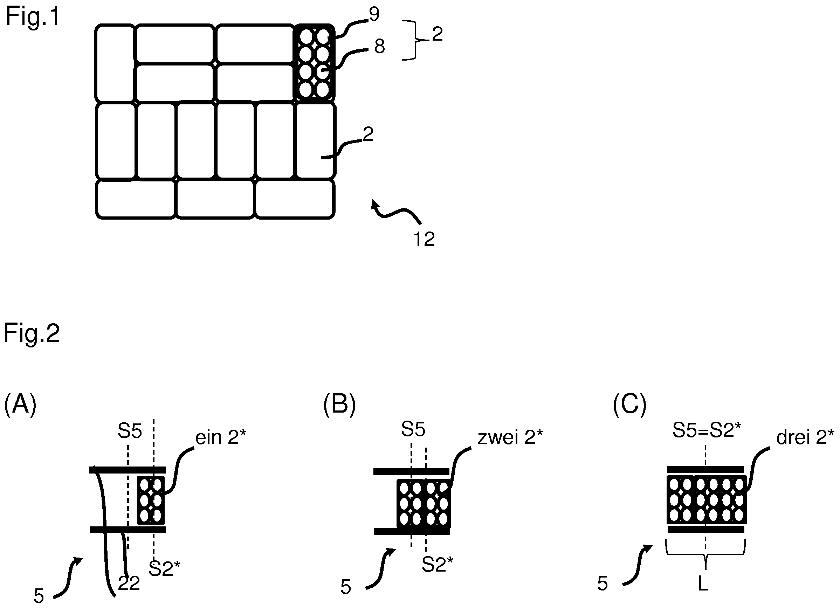

Figur 1 zeigt schematisch die Zusammenstellung von Stückgütern 2 als Lage 12, wie sie beispielsweise für die Palettierung und weitere Verarbeitung zusammengestellt werden soll. Im dargestellten Ausführungsbeispiel werden die Stückgüter 2 durch jeweils acht Flaschen 8 gebildet, die mittels einer Schrumpffolie 9 zu Gebinden zusammenfasst sind.

Figuren 2A und 2B zeigen das unsymmetrische Beladen eines Manipulators 5, der zwischen den Klemmbacken 22 bis zu drei Stückgüter 2* erfassen kann. Wird der Manipulator 5 nur mit einem oder zwei Stückgütern 2 beladen, so erfolgt die Anordnung der Stückgüter 2* außermittig zu den Klemmbacken 22, d.h., die erste vertikale Symmetrieebene S2* ist beabstandet von der zweiten vertikalen Symmetrieebene S5 des Manipulators 5. Wird der Manipulator 5 dagegen vollständig mit drei Stückgütern 2* beladen, dann fallen die erste vertikale Symmetrieebene S2* und die zweite vertikale Symmetrieebene S5 des Manipulators 5 zusammen.

Wenn im vorliegenden Zusammenhang von vertikalen Symmetrieebenen die Rede ist, die sich in erster Linie auf die Positionierungen der Stückgüter 2, 2* bzw. deren Relativpositionen zum Manipulator 5 bzw. zu dessen Klemm- und/oder Greifmitteln beziehen, so sind diese vertikalen Symmetrieebenen definitionsgemäß senkrecht oder ungefähr senkrecht zu einer Horizontalförderebene der Horizontalfördereinrichtung 6 (vergleiche Figur 2) orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung TR und/oder in etwa senkrecht zu einer Längserstreckungsrichtung der geschlossenen Formation F orientiert. Sofern sich der Leser diese Transportrichtung TR als horizontalen Vektorpfeil vergegenwärtigt, der parallel zur horizontalen Auflageebene der Horizontalfördereinrichtung 6 sowie parallel zur normalerweise ebenfalls horizontal oder abschnittsweise horizontal verlaufenden Transporteinrichtung 3 verläuft, so durchstößt dieser Vektorpfeil die senkrecht stehenden Symmetrieebenen ebenfalls im Wesentlichen senkrecht. Wie erwähnt, sind diese mindestens zwei Symmetrieebenen - eine bezieht sich auf die Stückgüter 2, die andere auf den Manipulator 5 - in einem gewissen Abstand, sofern der Manipulator 5 unsymmetrisch oder einseitig beladen ist. Falls die Symmetrieebenen zusammenfallen oder ungefähr zusammenfallen, liegt der Sonderfall des vollständig beladenen und/oder symmetrischen bzw. mittig beladenen Manipulators 5 vor, wie dies beispielsweise in Figur 2C dargestellt ist.

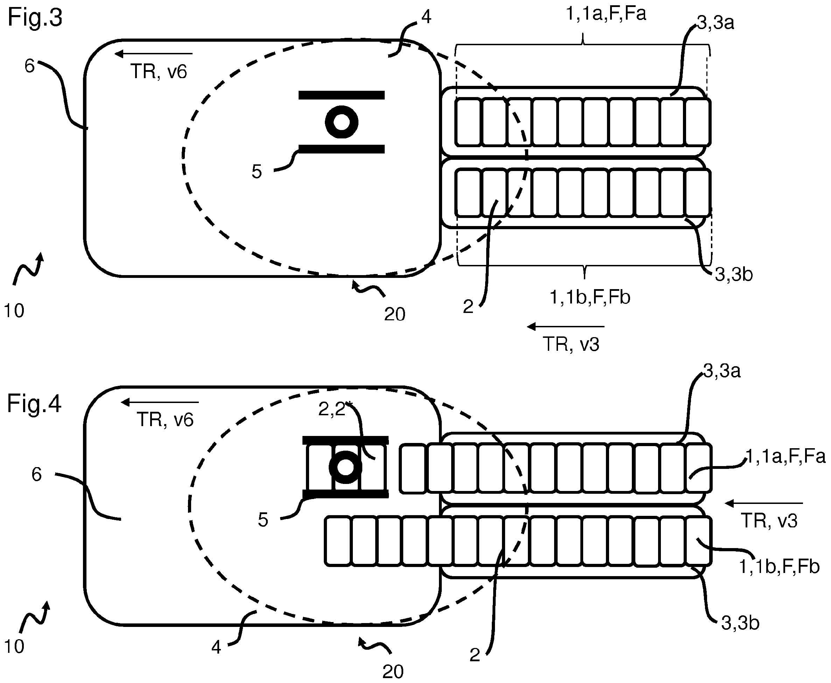

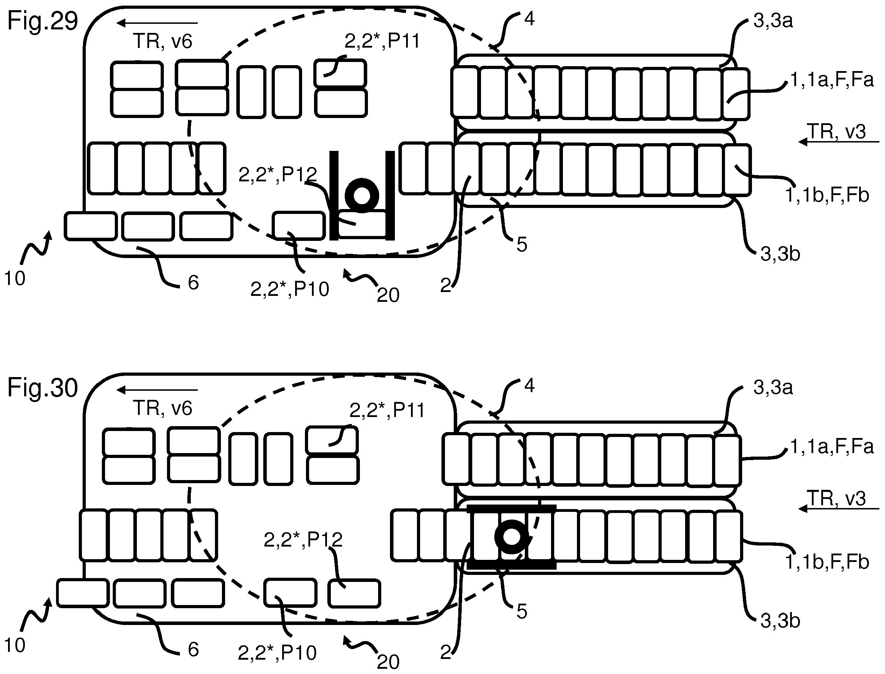

Figuren 3 bis 32 zeigen schematisch einen zeitlichen Ablauf eines erfindungsgemäßen Verfahrens zum Umgang mit in zwei parallelen Reihen 1, 1a,1b hintereinander bewegten Stückgütern 2 durch eine entsprechende Handhabungsvorrichtung 10 zum Vorbereiten einer Lage 12 von Stückgütern 2 gemäß Figur 1.

Die Handhabungsvorrichtung 10 umfasst zwei parallel angeordnete erste Transporteinrichtungen 3, 3a, 3b, über welche unmittelbar aufeinanderfolgende Stückgüter 2 in einer zwei parallelen Reihen 1, 1a, 1b unterbrechungsfrei und/oder mit kontinuierlicher Transportgeschwindigkeit v3 in einen Erfassungsbereich 4 mindestens eines beweg-, verschieb- und/oder rotierbaren Manipulators 5 der Handhabungsvorrichtung 10 transportiert werden. Insbesondere ist vorgesehen, dass den zwei parallelen ersten Transporteinrichtungen 3a, 3b genau ein Erfassungsbereich 4 eines Manipulators 5 der Handhabungsvorrichtung 10 zugeordnet ist. Die Transporteinrichtungen 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in jeder der Reihen 1a, 1b jeweils - wie in den Figuren 3ff. dargestellt - in einer sogenannten geschlossenen Formation F, Fa, Fb, kontinuierlich in den Erfassungsbereich 4 des Manipulators 5 ein.

Die Figuren 3 bis 32 verdeutlichen insbesondere den in Transportrichtung TR lückenlos weitergeführten Transport der Reihen 1, 1a, 1b bzw. Formationen F, Fa, Fb im Erfassungsbereich 4 der Handhabungsvorrichtung 10. Insbesondere werden die Stückgüter 2 der jeweiligen Reihe 1a, 1b im Erfassungsbereich 4 ohne Unterbrechung und mit unveränderter Transportgeschwindigkeit weitertransportiert. Dem Erfassungsbereich 4 ist insbesondere eine Horizontalfördereinrichtung 6 zugeordnet, die sich mit einer Geschwindigkeit v6 bewegt. Insbesondere entspricht die Geschwindigkeit v6 der Horizontalfördereinrichtung 6 der Transportgeschwindigkeit v3 der Transporteinrichtungen 3a, 3b. Die in parallelen Reihen 1a, 1b über die Transporteinrichtungen 3a, 3b ankommenden Stückgüter 2 werden durch den Staudruck der nachfolgenden Stückgüter 2 auf die Horizontalfördereinrichtung 6 übergeschoben und dort unterbrechungsfrei weiter befördert.

Weiterhin ist möglich, dass die Stückgüter 2 mehrreihig, insbesondere in mehreren Parallelreihen 1a, 1b, auf einer einzigen, gemeinsamen Transporteinrichtung 3 (nicht dargestellt) zum Erfassungsbereich 4 des Manipulators 5 hin transportiert werden. Die Parallelreihen 1a, 1b können dabei beabstandet zueinander oder weitgehend ohne Abstand zueinander auf der Transporteinrichtung 3 transportiert werden.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet.

Der Manipulator 5 ist zum klemmenden und/oder kraft- und/oder formschlüssigen Entgegennehmen von Stückgütern 2, 2* innerhalb des Erfassungsbereichs 4 ausgebildet. Wie in Figur 4 dargestellt, greift der Manipulator 5 entsprechend seiner maximalen Aufnahmekapazität drei Stückgüter 2 aus der über die Transporteinrichtung 3a einlaufenden geschlossenen Formation Fa. Die vom Manipulator 5 erfassten Stückgüter 2 werden nachfolgend zur Unterscheidung von den in Formation F angeordneten Stückgütern 2 mit dem Bezugszeichen 2* bezeichnet. Der Manipulator 5 trennt die erfassten Stückgüter 2* von der einreihigen Formation Fa ab und überführt die Gruppe von drei erfassten Stückgütern 2* in eine Position. Dabei wird die Gruppe von drei erfassten Stückgütern 2* durch den Manipulator 5 insbesondere durch Verschieben in Transportrichtung TR von der Formation Fa der Stückgüter 2 beabstandet.

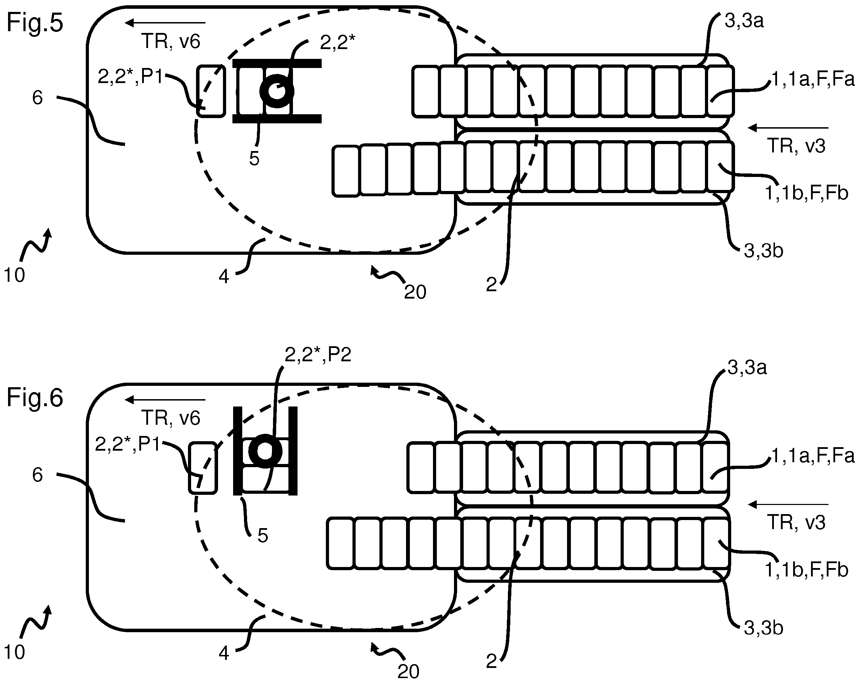

In einem weiteren, in Figur 5 dargestellten Verfahrensschritt öffnet sich der Manipulator 5 in einer ersten Position, um die erfassten drei Stückgüter 2, 2* freizugeben. Anschließend wird der Manipulator 5 derart über zwei der drei gegenüber der Formation Fa verschobenen Stückgütern 2*positioniert, dass er diese nunmehr asynchron erfassen und anschließend in eine weitere Position überführen kann. Das dabei nicht erneut gegriffene Stückgut 2* befindet sich nunmehr in seiner ersten Zielposition P1.

Der Manipulator 5, der nunmehr nur noch zwei Stückgüter 2* gegriffen hat überführt diese in eine zweite Zielposition und/oder Zielausrichtung P2. Dabei erfolgt eine Drehbewegung des Manipulators 5 um 90° um eine vorzugsweise in etwa vertikale Achse, die sich zwischen dem jeweiligen wenigstens einen klemmend und/oder kraft- und/oder formschlüssig erfassten Stückgut 2* und der Zielposition P2 befindet. Gegebenenfalls ist dieser Drehbewegung zusätzlich eine Schiebebewegung überlagert. Um eine Lücke zwischen dem in Zielposition P1 auf der Horizontalfördereinrichtung 6 angeordneten Stückgut 2* und den erneut durch den Manipulator 5 gegriffenen Stückgütern 2* zu erzeugen, kann auch vorgesehen sein, dass diese durch den Manipulator 5 kurz in ihrer Position gehalten werden während das in der Zielposition P1 befindliche Stückgut 2* mit der Geschwindigkeit v6 auf der Horizontalfördereinrichtung 6 weiterbewegt wird.

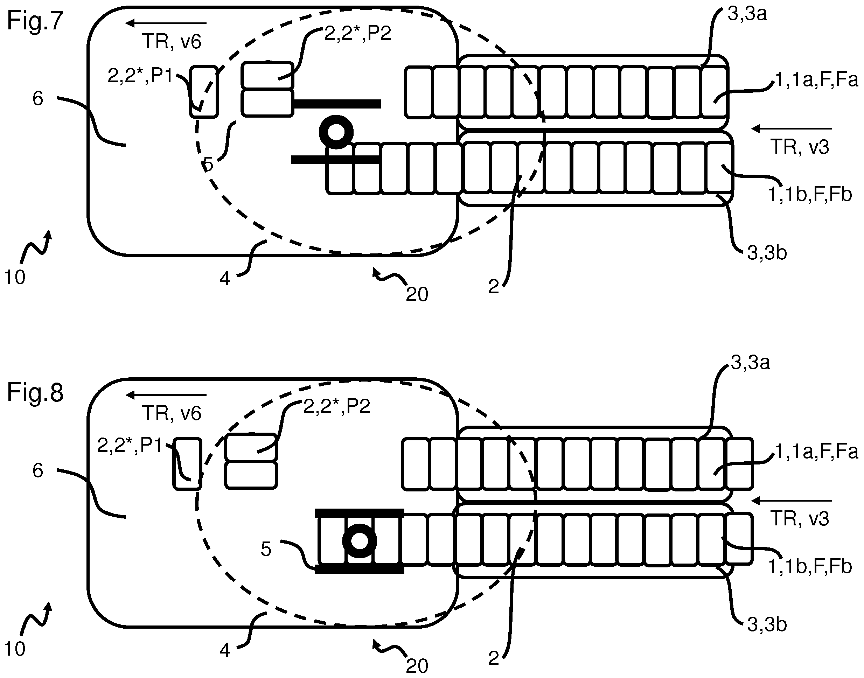

Wie in Figur 7 dargestellt, löst sich der Manipulator 5 von den an die Zielposition P2 beförderten Stückgüter 2*, um nunmehr, wie in den Figur 8 bis 10 dargestellt, drei Stückgüter 2, 2* aus der einlaufenden Formation Fb abzugreifen und dieses unter Drehung um 90° in eine Position auf der Horizontalfördereinrichtung 6 zu befördern.

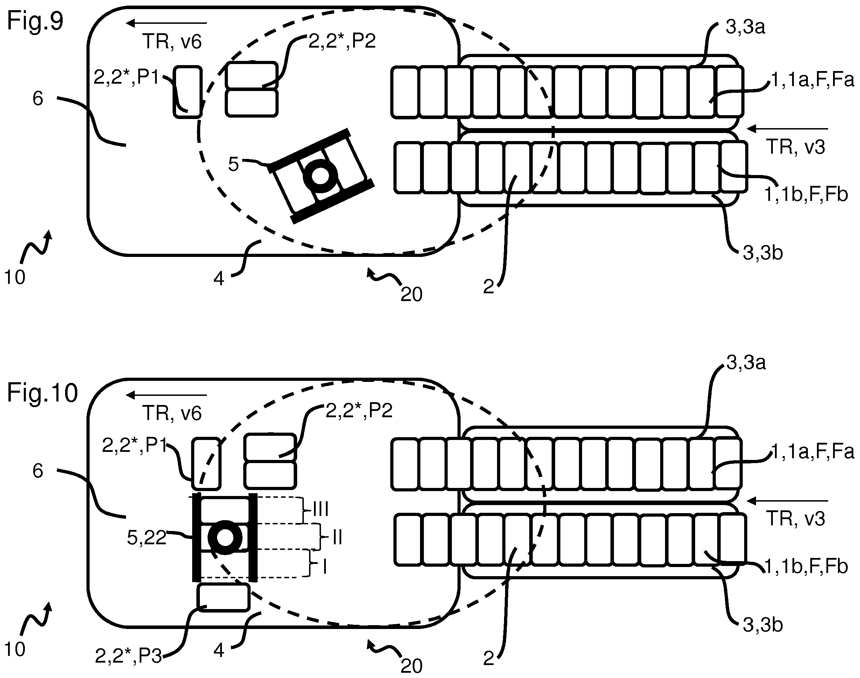

Diese Position entspricht einer Zielposition P3 für eines der drei gegriffenen Stückgüter 2*. In dem in Figur 10 dargestellten Verfahrensschritt öffnet sich der Manipulator 5 und positioniert sich über zwei der drei gegenüber der Formation Fa verschobenen Stückgütern 2*, um diese asynchron zu erfassen und anschließend in eine weitere Position zu überführen. Das dabei nicht erneut gegriffene Stückgut 2* befindet sich nunmehr in seiner Zielposition P3.

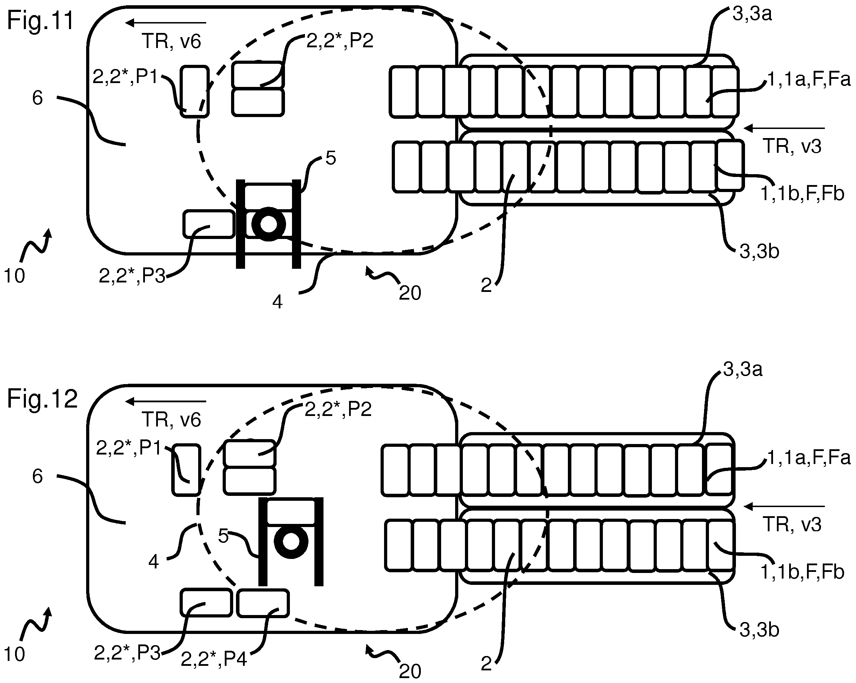

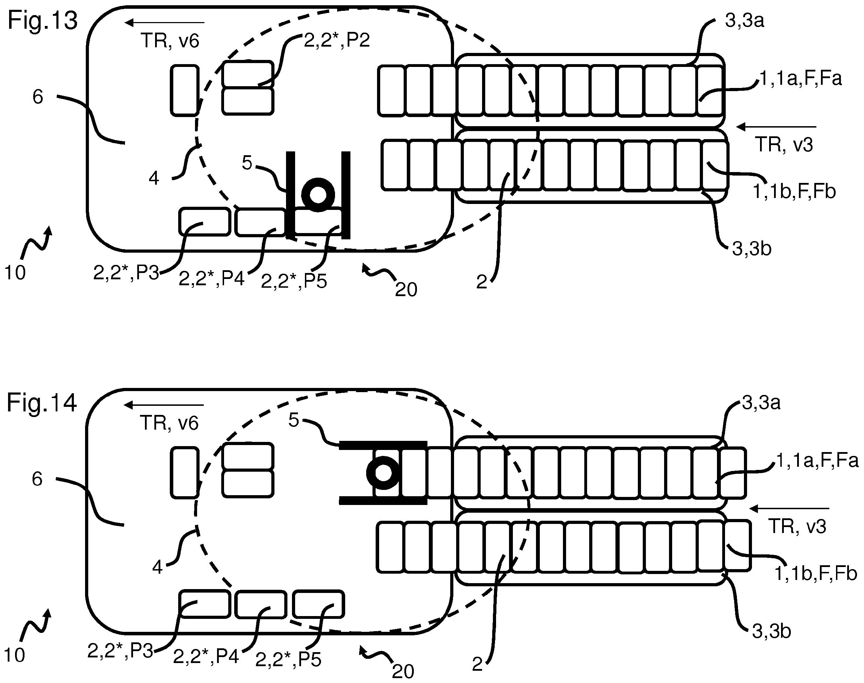

Der Manipulator 5, der nunmehr nur noch zwei Stückgüter 2* gegriffen hat überführt diese gemäß Figuren 11 und 12 in eine weitere Position, die die Zielposition und/oder Zielausrichtung P4 für eines der beiden Stückgüter 2* darstellt und greift - wie insbesondere in Figur 12 dargestellt - nunmehr nur noch das andere der beiden Stückgüter 2* und überführt dieses gemäß Figur 13 in eine Zielposition und/oder Zielausrichtung P5.

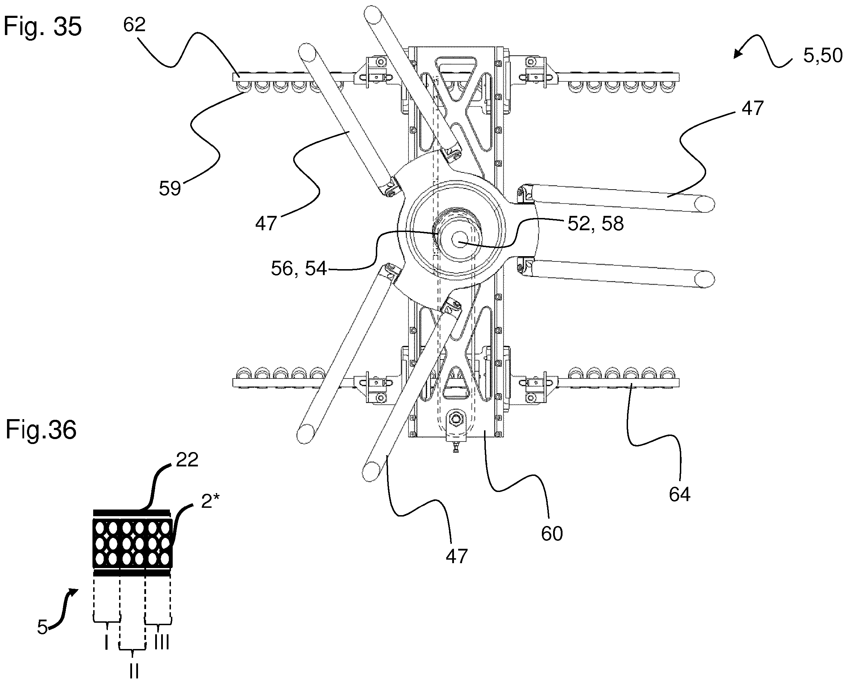

Die in den Figuren 10 bis 13 dargestellte selektive Freigabe einzelner Stückgüter 2, 2* an ihren jeweiligen Zielpositionen P3, P4, P5 kann insbesondere durch einen Manipulator 5 erfolgen, dessen Klemmbacken 22 in benachbarte Klemmbereiche I, II und III unterteilt sind (vergleiche Figuren 10 und 36). Insbesondere können die benachbarten Klemmbereiche I, II und III der Klemmbacken 22 selektiv einzelne Stückgüter 2, 2* an definierten Zielpositionen P3, P4, P5 freigeben, wobei gleichzeitig die Erfassung und/oder Klemmung mindestens eines benachbarten Stückgutes 2, 2* aufrechterhalten wird, um dieses anschließend in mindestens eine weitere, von der ersten Zielposition P3 beabstandete zweite Zielposition P4, P5 zu überführen. In Figur 10 wird beispielsweise ein Stückgut 2, 2* selektiv durch den Klemmbereich I des Manipulators 5 in der Zielposition P3 freigegeben, während die beiden jeweils in den Klemmbereichen II und III geklemmten Stückgüter 2, 2* weiterhin geklemmt werden. Anschließend bewegt sich der Manipulator 5 in eine neue definierte Zielposition und gibt gemäß Figur 11 in dieser Zielposition P4 selektiv das im mittigen Klemmbereich II der Klemmbacken 22 geklemmte Stückgut 2, 2* frei. Gemäß Figur 12 überführt der Manipulator 5 das verbleibende, im Klemmbereich III geklemmte Stückgut 2, 2* in die Zielposition P5 und gibt dieses gemäß Figur 13 dort frei, um weitere Stückgüter 2 aus der einlaufenden Formation F1 abzugreifen.

Die benachbarten Klemmbereiche I, II und III der Klemmbacken 22 des Manipulators sind bei dieser Ausführungsform jeweils unterschiedlich ansteuerbar, aktivierbar und/oder bewegbar. Dabei ist jedem der unterschiedlichen Klemmbereiche I, II und III jeweils ein eigener Antrieb (nicht dargestellt), beispielsweise ein Servomotor, zugeordnet sein. Gemäß einer alternativen Ausführungsform können die Antriebe der unterschiedlichen Klemmbereiche I, II und III abhängig voneinander ansteuerbar sein. In diesem Fall wäre es denkbar, dass mehrere Stückgüter 2, 2* in bzw. bei Erreichen einer Zielposition freigegeben werden. Nach Freigabe kann der Manipulator 5 wenigstens eines der bei Erreichen der Zielposition freigegebenes Stückgut 2, 2* nochmals entgegennehmen und zeitlich nach Entgegennahme in Richtung der weiteren Zielposition bewegen. Dies kann beispielsweise durch ein zwischenzeitliches (zwischen Abgabe und erneuter Aufnahme) Verschieben des Manipulators 5 relativ zu den in der vorherigen Zielposition freigegebenen Stückgütern 2, 2* geschehen.

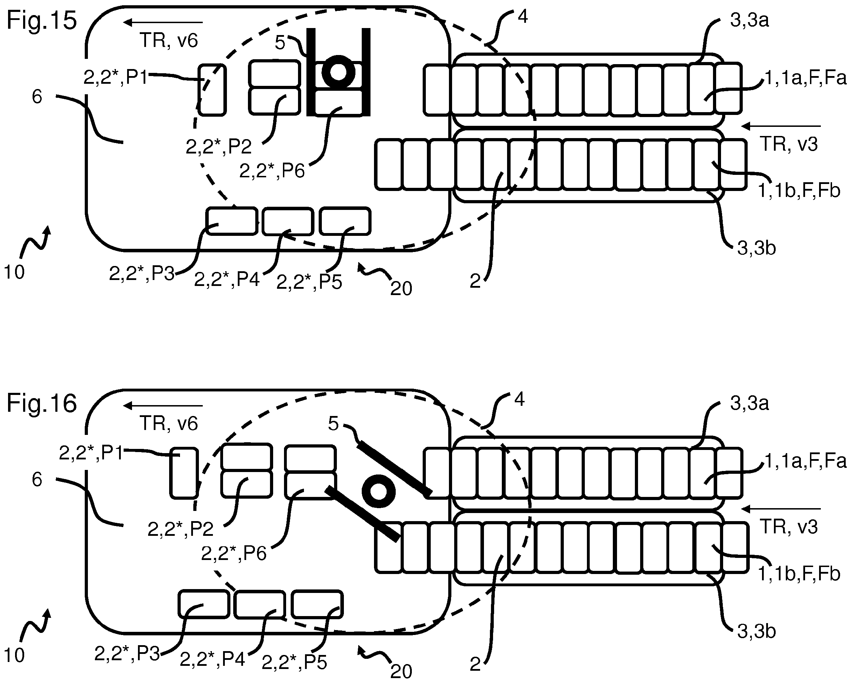

Anschließend löst sich der Manipulator 5 von dem an die Zielposition P5 beförderten Stückgut 2*, um nunmehr, wie in Figur 14 dargestellt, zwei Stückgüter 2* der Formation Fa asymmetrisch abzugreifen und unter Drehung um 90° in eine in Figur 15 dargestellte Zielposition und/oder Zielausrichtung P6 zu befördern.

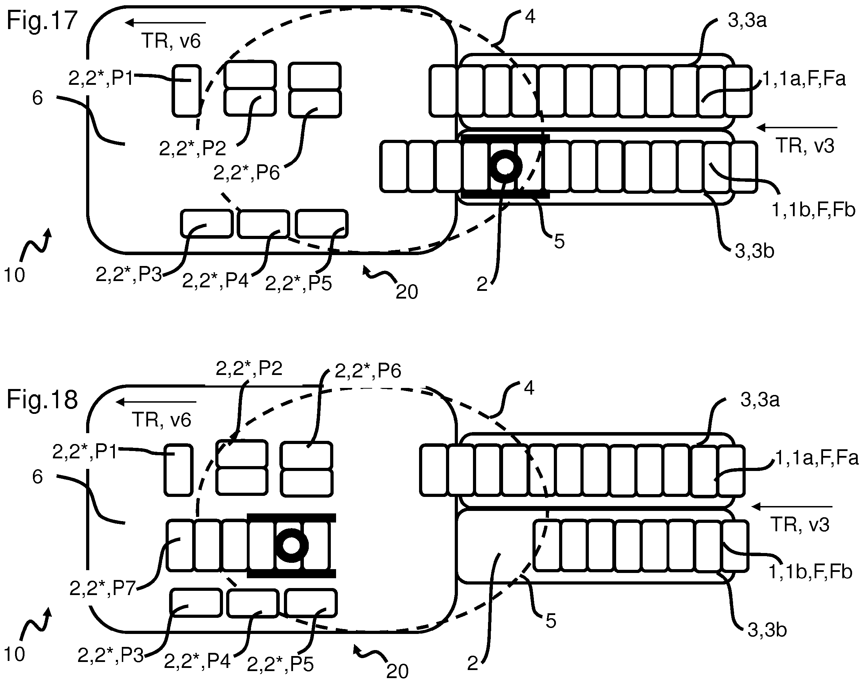

Anschließend löst sich der Manipulator 5 von den an die Zielposition P6 beförderten Stückgütern 2* und greift in einem weiteren Manipulationsschritt nunmehr nicht die zuvorderst einlaufenden Stückgüter 2 der geschlossenen Formation Fb. Stattdessen erfasst der Manipulator 5 das vierte, fünfte und sechste Stückgut 2 der geschlossen einlaufenden Formation Fb. Insbesondere eilen den durch den Manipulator 5 erfassten Stückgütern 2* der Formation Fb somit drei weitere Stückgüter 2 voraus. Die drei klemmend und/oder kraft- und/oder formschlüssig durch den Manipulator 5 erfassten Stückgüter 2 werden nun von der geschlossenen Formation Fb räumlich abgetrennt und - wie in Figur 18 dargestellt - durch Verschieben in Transportrichtung TR in eine definierte relative Zielposition und/oder Zielausrichtung P7gegenüber den nachfolgenden Stückgütern 2 der Formation Fb gebracht. Dabei werden die drei vorauseilenden Stückgüter ebenfalls neu positioniert. In diesem Manipulationsschritt werden also drei Stückgüter 2, 2* vom Manipulator erfasst, aber insgesamt sechs Stückgüter 2, 2* werden in eine Zielposition P7 verschoben, wobei die nicht vom Manipulator 5 erfassten Stückgüter 2 durch einen Oberflächenkontakt zwischen einem vom Manipulator 5 erfassten Stückgut 2* und einem vom Manipulator 5 nicht erfassten Stückgut 2 in die Zielposition P7 geschoben werden.

Die insgesamt sechs Stückgüter 2, 2* gelangen insbesondere durch eine Bewegung in linearer Richtung in die Zielposition P7. Vorzugsweise sind die insgesamt sechs Stückgüter 2, 2* in ihrer Zielposition P7 in einer Flucht zur geschlossenen Formation Fb angeordnet.

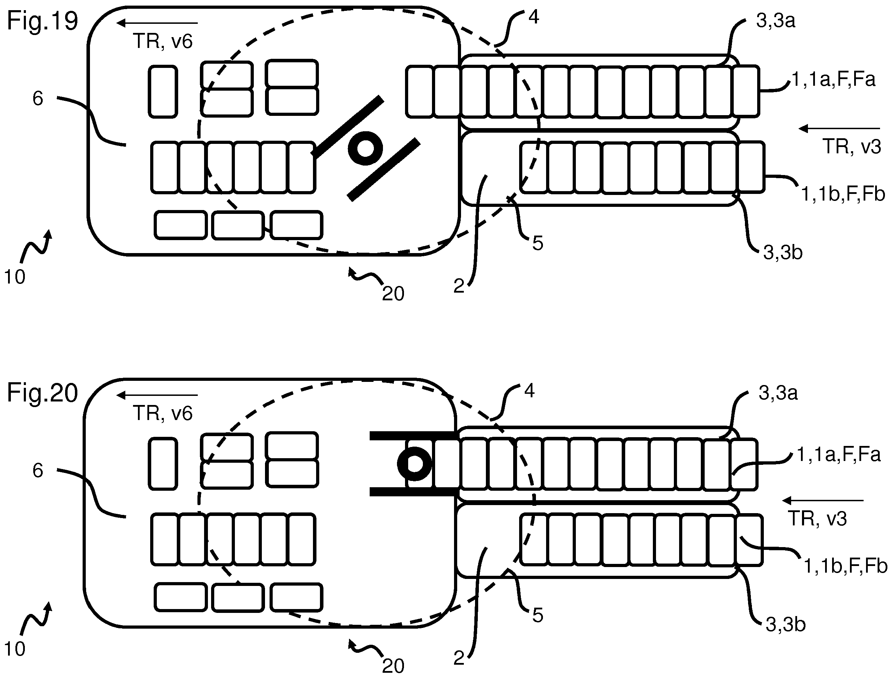

Nach Erreichen der Zielposition P7 und Lösen des Manipulators 5 von der Gruppe an erfassten Stückgütern 2*(vergleiche Figur 19), wird der Oberflächenkontakt zwischen dem vom Manipulator 5 erfassten Stückgut 2* und dem vom Manipulator 5 nicht erfassten Stückgut 2 beibehalten.

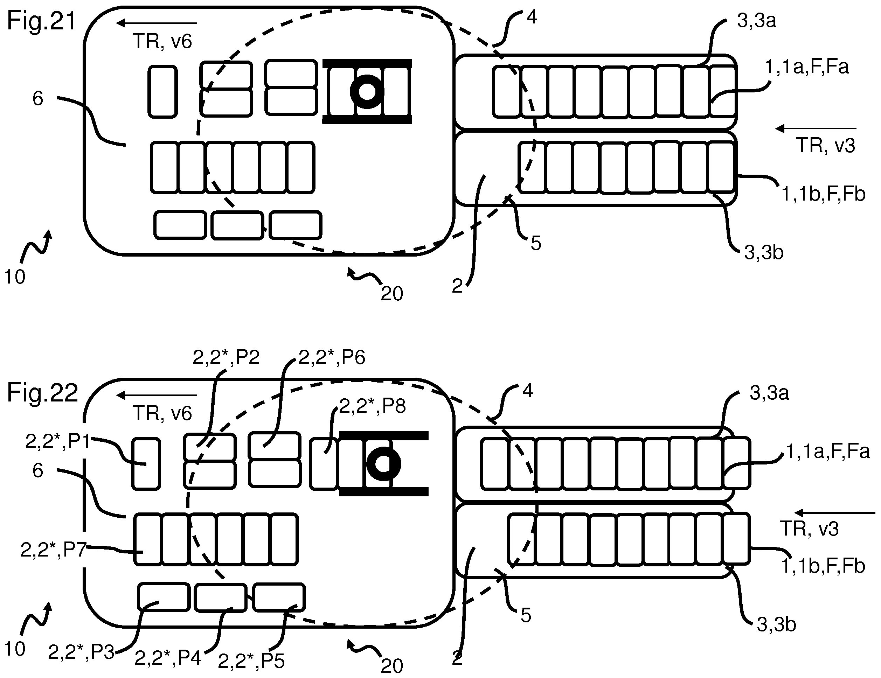

In den Figuren 19 bis 21 ist dargestellt, dass sich der Manipulator 5 nunmehr wiederum zu der einlaufenden geschlossenen Formation Fa bewegt und gemäß Figur 21 die vorderste drei Stückgüter 2, 2* derselben ergreift und in Transportrichtung TR verschiebt.

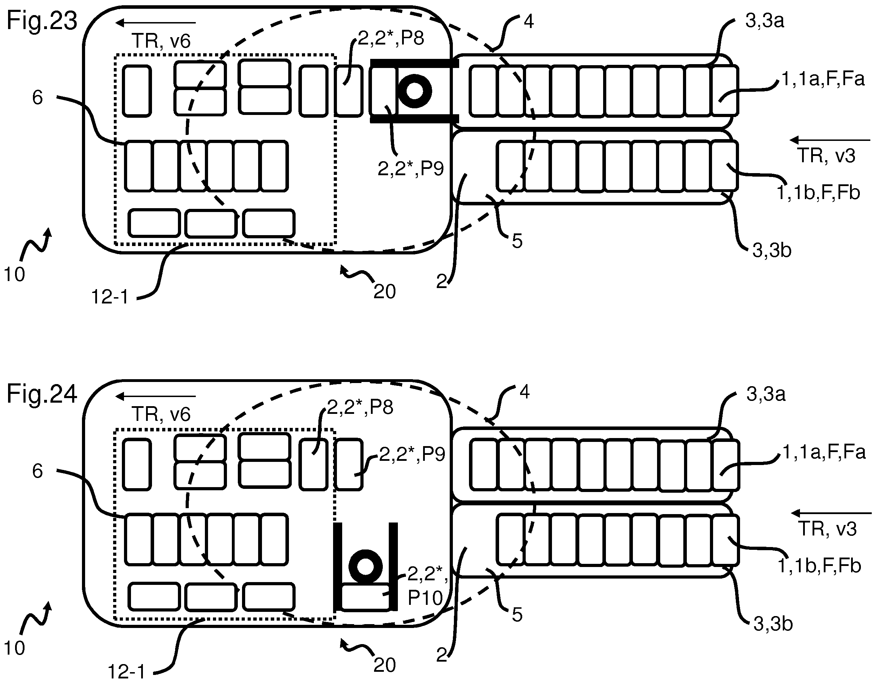

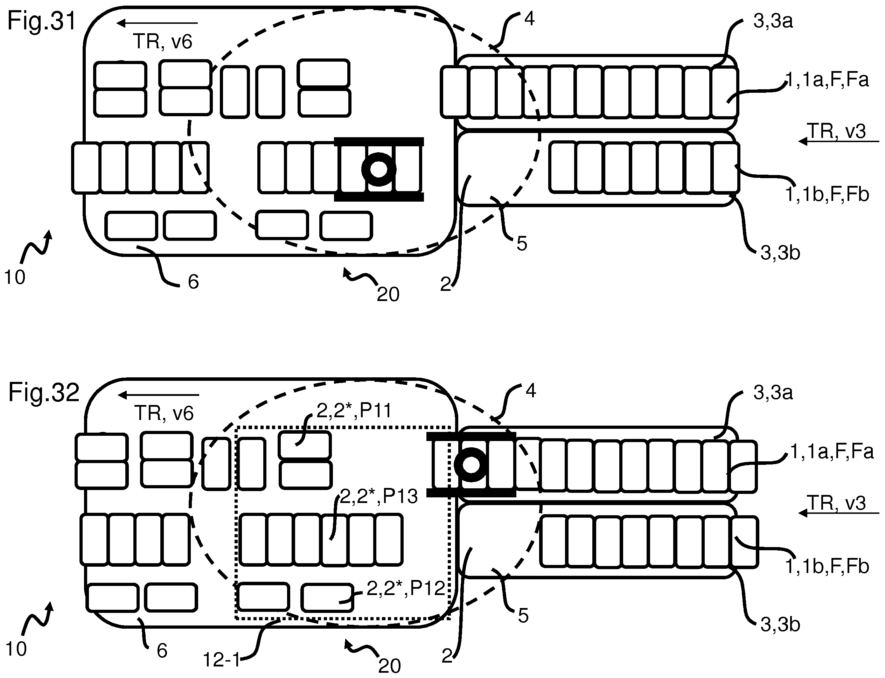

Gemäß dem in Figur 22 dargestellten Verfahrensschritt öffnet sich der Manipulator 5 und setzt somit eines der Stückgüter 2* an einer Zielposition P8 auf der Horizontalfördereinrichtung 6 ab, während er die anderen beiden Stückgüter 2* erneut asynchron erfasst. Wie in Figur 23 dargestellt, wird ein weiteres Stückgut 2* in einer Zielposition P9 beabstandet zu dem in Zielposition P8 angeordneten Stückgut 2* auf der Horizontalfördereinrichtung 6 positioniert. Der Abstand ist notwendig, da die in den Positionen P1 bis P8 angeordneten Stückgüter 2* eine erste Ziellage 12-1 gemäß Figur 1 bilden. Das in Position P9 angeordnete Stückgut 2* ist bereits Bestandteil einer zweiten zu bildenden Ziellage 12-2, die zumindest teilweise insbesondere in Figur 32 zu erkennen ist.

Die in ihren Zielpositionen P1 bis P8 weitgehend als lose Ziellage 12-1 angeordneten Stückgüter 2* werden in einem nicht dargestellten nachfolgenden Schritt mit geeigneten Schiebern o.ä.zusammengeschoben, um eine geschlossene Ziellage 12-1 gemäß Figur 1 zu bilden. Diese kann dann für die weitere Verarbeitung beispielsweise auf eine Palette überführt werden.

Figuren 23 bis 32 stellen einige Verfahrensschritte bei der Ausbildung einer zweiten Ziellage 12-2 dar. Nachdem das zweite Stückgut 2* der von der Formation Fa gemäß Figur 21 abgegriffenen Dreiergruppe in der Zielposition P9 abgesetzt wurde, wird das verbleibende Stückgut 2* erneut asynchron gegriffen und vermittels einer 90° Drehung, insbesondere in Verbindung mit einer seitlichen Verschiebung, in eine Zielposition und Zielausrichtung P10 überführt.

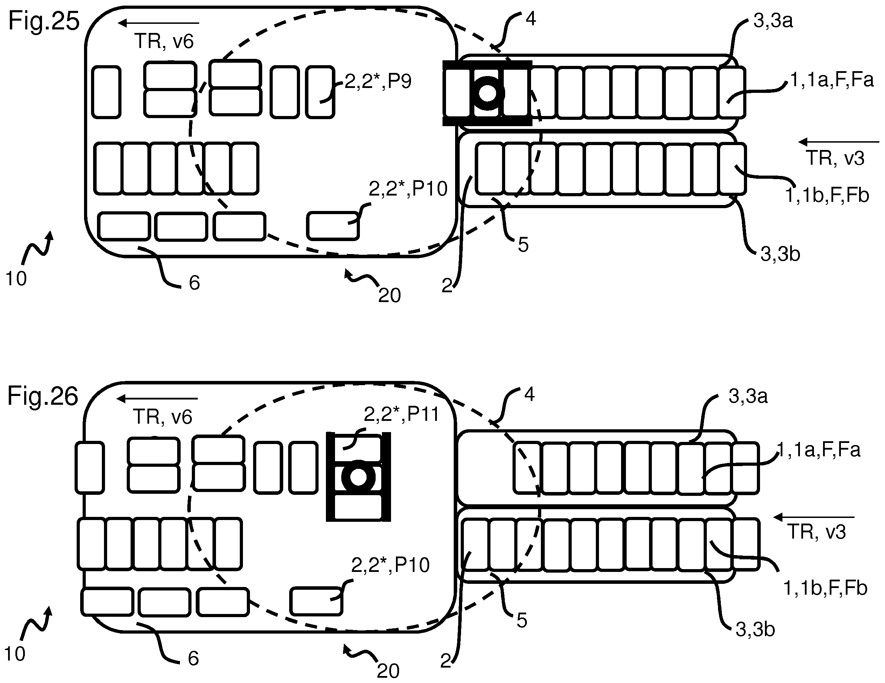

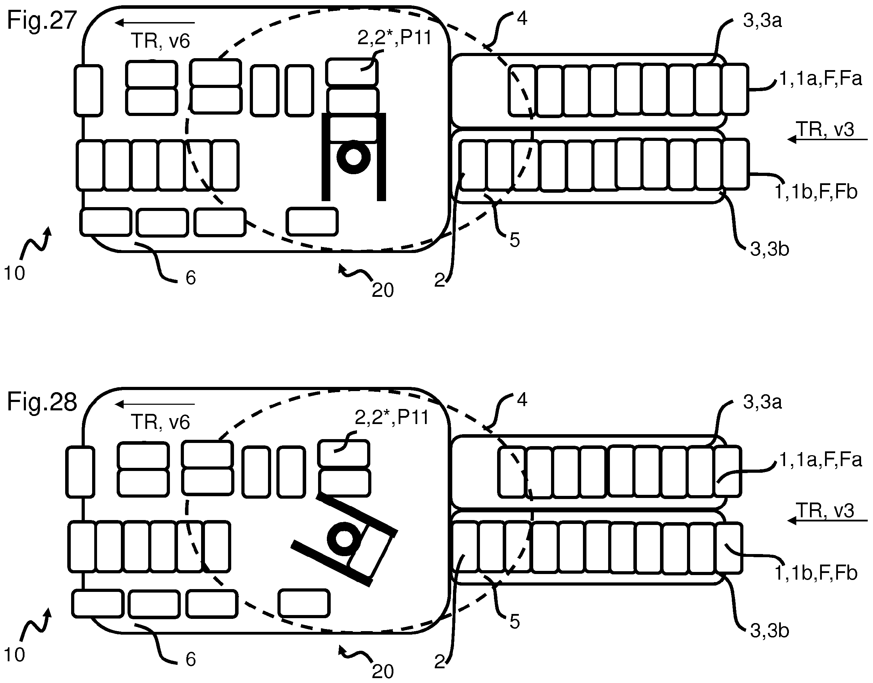

Anschließend greift der Manipulator 5 gemäß Figur 25 die drei vorauseilenden Stückgüter 2, 2* der weiter in die Horizontalfördereinrichtung 6 einlaufenden Formation Fa und überführt diese unter Drehung in eine Position, an der nunmehr zwei Stückgüter 2* an ihrer Zielposition und Zielausrichtung P11 abgesetzt werden, während das dritte Stückgut 2* unter erneuter Drehung gemäß Figuren 28 bis 30 in seine Zielposition und Zielausrichtung P12 überführt wird.

Anschließend löst sich der Manipulator 5 von den an die Zielposition P12 beförderten Stückgut 2* und greift in einem weiteren Manipulationsschritt nunmehr nicht die zuvorderst einlaufenden Stückgüter 2 der geschlossenen Formation Fb. Stattdessen erfasst der Manipulator 5 das vierte, fünfte und sechste Stückgut 2 der geschlossen einlaufenden Formation Fb. Insbesondere eilen den durch den Manipulator 5 erfassten Stückgütern 2* der Formation Fb somit drei weitere Stückgüter 2 voraus. Die drei klemmend und/oder kraft- und/oder formschlüssig durch den Manipulator 5 erfassten Stückgüter 2 werden nun von der geschlossenen Formation Fb räumlich abgetrennt und - wie in Figur 31 dargestellt - durch Verschieben in Transportrichtung TR in eine definierte relative Zielposition und/oder Zielausrichtung P13 gegenüber den nachfolgenden Stückgütern 2 der Formation Fb gebracht. Dabei werden die drei vorauseilenden Stückgüter ebenfalls neu positioniert. In diesem Manipulationsschritt werden also drei Stückgüter 2, 2* vom Manipulator erfasst, aber insgesamt sechs Stückgüter 2, 2* werden in eine Zielposition P13 verschoben, wobei die nicht vom Manipulator 5 erfassten Stückgüter 2 durch einen Oberflächenkontakt zwischen einem vom Manipulator 5 erfassten Stückgut 2* und einem vom Manipulator 5 nicht erfassten Stückgut 2 in die Zielposition P7 geschoben werden.

Die insgesamt sechs Stückgüter 2, 2* gelangen insbesondere durch eine Bewegung in linearer Richtung in die Zielposition P13. Vorzugsweise sind die insgesamt sechs Stückgüter 2, 2* in ihrer Zielposition P13 in einer Flucht zur geschlossenen Formation Fb angeordnet.

Nach Erreichen der Zielposition P13 und Lösen des Manipulators 5 von der Gruppe an erfassten Stückgütern 2*(vergleiche Figur 32), wird der Oberflächenkontakt zwischen dem vom Manipulator 5 erfassten Stückgut 2* und dem vom Manipulator 5 nicht erfassten Stückgut 2 beibehalten.

Die weiteren Manipulationsschritte zum Ausbilden der zweiten Teillage 12-2 werden nicht dargestellt. Diese verlaufen vergleichbar zu dem in den Figuren 3 bis 32 dargestellten Prinzip, wobei die Anzahl der jeweils durch den Manipulator 5 erfassten Stückgüter 2* immer nach dem Prinzip der Zeit- und/oder Wegoptimierung ausgewählot wird.

Bei den beschriebenen Manipulationsschritten werden die erfassten Stückgüter 2* vorzugsweise jeweils in einem einzigen, insbesondere unterbrechungsfreien, Manipulationsschritt in die Zielposition und/oder Zielausrichtung P1 bis P13 überführt, geschoben und/oder gedreht. Es kann aber auch vorteilhaft sein, dass der Manipulator 5 mehr Stückgüter 2* erfasst, als in einer jeweiligen Zielposition anzuordnen sind. Der Manipulator 5 setzt die Stückgüter 2* an einer Position ab, dass zumindest eines der Stückgüter 2* die gewünschte Zielposition einnimmt. Anschließend greift er die anderen Stückgüter 2* erneut, wobei das erneute Abgreifen vorzugsweise asynchron erfolgt, da nunmehr nicht mehr die volle Aufnahmekapazität des Manipulators ausgeschöpft wird. Die erneut gegriffenen Stückgüter 2* werden nun durch weitere Bewegung, beispielsweise Drehung und/oder Verschiebung gegenüber der Horizontalfördereinrichtung zu deren Zielposition befördert und dort positioniert.

Hierbei kann vorgesehen sein, dass der Manipulator 5 die erfassten Stückgüter 2* beispielsweise anhebt, zu einer Zielposition befördert und auf der Horizontalfördereinrichtung 6 innerhalb des Erfassungsbereiches 4 wieder absetzt. Alternativ kann vorgesehen sein, dass der Manipulator 5 die Stückgüter 2* auf der Horizontalfördereinrichtung 6 verschiebt, indem er insbesondere eine Geschwindigkeitskomponente und/oder eine Richtungskomponente auf die abgegriffenen Stückgüter 2* aufbringt. Insbesondere bei dem gleichzeitigen Verschieben von durch den Manipulator 5 erfassten Stückgütern und mindestens einem weiteren mit diesem in Oberflächenkontakt stehenden Stückgut 2 ist im Wesentlichen kein Anheben der erfassten Stückgüter 2* vorgesehen. Stattdessen werden diese nur auf der Horizontalfördereinrichtung 6 verschoben,

Bei den hier beschriebenen Manipulationsschritten ist insbesondere vorgesehen, dass sich der Manipulator 5 zumindest beim Erfassen des / der Stückgüter 2* und bei deren Freigabe in der jeweiligen Zielposition und Zielausrichtung mit einer Geschwindigkeit bewegt, die annähernd bzw. exakt der Transportgeschwindigkeit v3 entspricht, mit der sich die geschlossenen Formationen Fa, Fb der Stückgüter 2 bewegen.

Die Zielpositionen stellen jeweils eine Relativposition gegenüber der Formation Fa bzw. Fb dar. Da sich die Transporteinrichtungen 3a, 3b und somit die Formationen Fa, Fb mit derselben Geschwindigkeit bewegen wie die Horizontalfördereinrichtung 6, bleibt der relative Abstand zwischen den Stückgütern 2* in ihrer jeweiligen Zielposition und einem noch nicht vom Manipulator 5 erfassten Stückgut 2 der Formationen Fa, Fb im weiteren Ablauf immer gleich, obwohl sich alle Stückgüter 2, 2* kontinuierlich weiter bewegen.

In dem Zeitfenster zwischen dem Erfassen von Stückgütern 2* durch den Manipulator 5 und deren Freigabe in der jeweiligen Zielposition ist die Geschwindigkeit des Manipulators 5 gegenüber der Transportgeschwindigkeit v3 der Formationen Fa, Fb erhöht. Die Bewegungsrichtung des Manipulators 5 beim Befördern der Stückgüter 2* der Formation F in eine Zielposition ergibt sich beispielsweise aus einer ersten Bewegungskomponente parallel zur Transportrichtung TR der Formation Fb und einer zweiten Bewegungskomponente senkrecht zur Transportrichtung TR der Formation F. Dadurch können die vom Manipulator 5 erfassten Stückgüter 2* in eine definierte Zielposition im Erfassungsbereich 4 des Manipulators 5 bewegt werden, die sich in Transportrichtung TR beabstandet vor der Formation F und seitlich verschoben zur Formation F befindet. Ist die zweite Bewegungskomponente senkrecht zur Transportrichtung TR der Formation F gleich Null, dann werden die erfassten Stückgüter 2* in eine Position verschoben, die sich in einer Flucht zur jeweiligen Formation F befindet.

Weiterhin kann vorgesehen sein, dass sich der Manipulator um einer Drehachse dreht, die senkrecht zur Ebene der Horizontalfördereinrichtung 6 ausgebildet ist und dadurch eine entsprechende Umpositionierung der erfassten Stückgüter 2* bewirkt. In Abhängigkeit davon, ob zusätzliche Bewegungskomponenten auf den Manipulator 5 aufgebracht werden, sind die derart bewegten Stückgüter 2* in einer Flucht zur jeweiligen Formation F angeordnet oder aber seitlich verschoben dazu angeordnet.

Gemäß einer weiteren nicht dargestellten Ausführungsform kann vorgesehen sein, dass der Manipulator 5 nach Verschieben einer Gruppe von erfassten Stückgüter 2, 2* und gleichzeitigem Verschieben mindestens eines vom Manipulator 5 nicht erfassten Stückguts 2, das in Oberflächenkontakt mit einem der vom Manipulator 5 erfassten Stückgüter 2, 2* steht, die Gruppe im Anschluss an den Schiebeschritt weiter umsetzt. Dies kann beispielsweise dadurch ermöglicht werden, dass die erfassten Stückgüter 2, 2* mit einer weiteren Richtungskomponente beispielsweise senkrecht zur Transportrichtung TR der Formation F beaufschlagt wird. Alternativ oder zusätzlich kann eine Rotation des Manipulators 5 eine Drehung der erfassten Stückgüter 2, 2* bewirken, wobei das nicht vom Manipulator 5 erfasste Stückgut 2 diese Drehung nicht mitmacht sondern mit der Geschwindigkeit v6 der Horizontalfördereinrichtung 6 weiter transportiert wird.

Gemäß einer weiteren nicht dargestellten Ausführungsform kann vorgesehen sein, dass der Manipulator 5 nach Verschieben einer Gruppe von erfassten Stückgüter 2* und mindestens einem vom Manipulator 5 nicht erfassten Stückgut 2, das in Oberflächenkontakt mit einem erfassten Stückgut 2* steht, sich von der Gruppe löst, anschließend erneut mindestens ein Stückgut 2, 2* dieser Gruppe erfasst und dieses dreht und/oder gegenüber der Gruppe verschiebt o.ä.

Auch kann ein Manipulator 5 mit erfassten Stückgütern 2* verwendet werden, um mindestens ein bereits in einem vorhergehenden Schritt in einer Zielposition angeordnetes Stückgut 2 durch Oberflächenkontakt zwischen dem vom Manipulator 5 erfassten Stückgut 2* und dem bereits auf der Horizontalfördereinrichtung 6 in einer ersten Zielposition angeordneten Stückgut 2 in eine neue Zielposition zu verschieben. Der Manipulator 5 setzt anschließend das erfasste Stückgut 2* an der neuen Zielposition frei, so dass ein Oberflächenkontakt zwischen dem bereits in einem vorhergehenden Schritt in einer Zielposition angeordnetem Stückgut 2 und dem weiteren Stückgut 2* bestehen bleibt.

Während der Positionierung der vom Manipulator 5 erfassten Stückgüter 2* werden die mindestens eine Transporteinrichtung 3 und die Horizontalfördereinrichtung 6 weiterhin konstant betrieben.

Die Geschwindigkeit v3, v6 ist dabei so gewählt, dass der Manipulator 5 innerhalb des ihm zur Verfügung stehenden Arbeitsbereichs ausreichend Zeit hat, um die Stückgüter 2* zu verschieben. Bevorzugt besteht der Manipulator 5 aus einem Deltakinematik- Roboter, um hoch dynamische Verschiebebewegungen zu realisieren und möglichst schnelle Taktzeiten zu ermöglichen.

Bei dem hier beschriebenen Verfahren werden die Gruppen an Stückgütern 2* gemäß der zu bildenden Gruppierung, Teillage oder Lage während des Gruppier- / Positionierprozesses gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2*, 2a in die Zielposition P, Pa und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. Gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators), der die Stückgüter 2, 2*, 2a in der gewünschten Weise erfassen, verschieben, positionieren, platzieren, drehen etc. kann, um die jeweiligen Zielpositionen P, Pa und/oder Zielausrichtungen für die Stückgüter 2, 2*, 2a anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

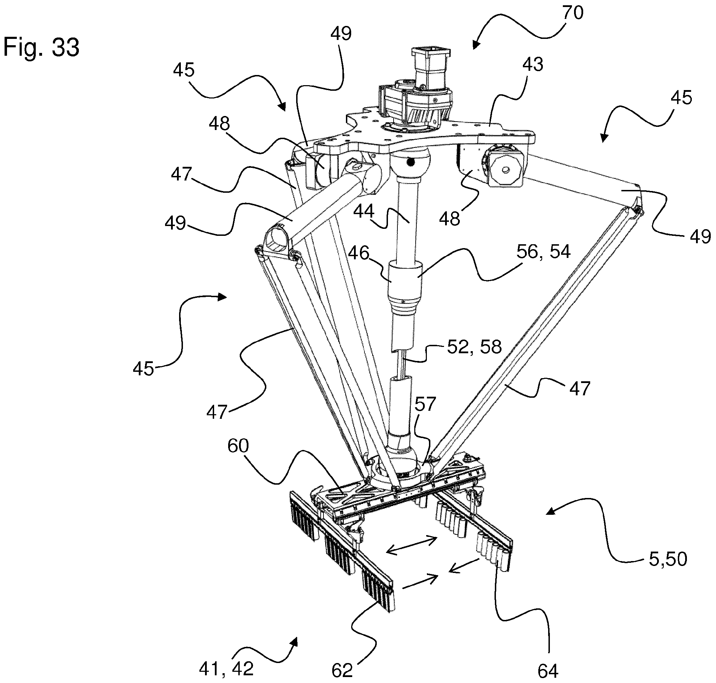

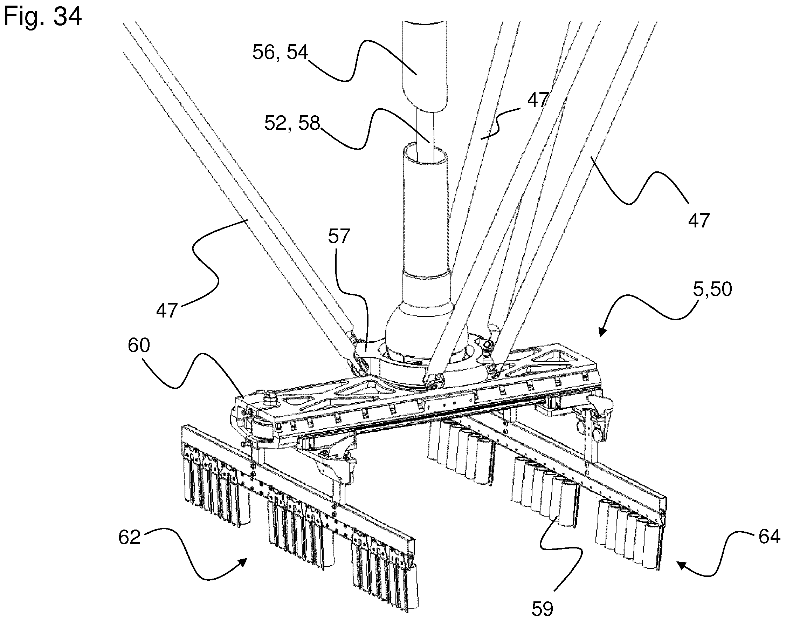

Figuren 33 bis 35 zeigen unterschiedliche Ansichten einer Ausführungsform eines Manipulators 5, 50 einer Handhabungsvorrichtung 10 und/oder Manipulationsvorrichtung (gemäß einer der voranstehenden Figuren) zur Durchführung einer Variante oder mehrerer Varianten des erfindungsgemäßen Verfahrens, insbesondere zeigt Figur 33 eine schematische Perspektivansicht; Figur 34 zeigt eine schematische Detailansicht eines unteren Teils der Vorrichtung aus Figur 33 und Figur 35 zeigt eine schematische Querschnittsdarstellung durch die Vorrichtung aus dem Ausführungsbeispiel gemäß Figur 33 und Figur 34.

Einleitend sei an dieser Stelle darauf hingewiesen, dass die in den Figuren 33 bis 35 erläuterten Ausführungsvarianten der Vorrichtung zur Durchführung zumindest einiger Varianten des erfindungsgemäßen Verfahrens sich auf einen Deltaroboter, einen sog. Tripod bzw. auf einen Deltakinematik-Roboter mit drei gleichartigen Schwenkarmen beziehen, der einen Teil einer Handhabungseinrichtung bzw. eines Manipulators zur Handhabung, zum Drehen, Verschieben oder Aufnehmen von Artikeln, Stückgütern oder Gebinden bilden oder diese Handhabungseinrichtung bzw. diesen Manipulator enthalten kann. Hinsichtlich einer möglichen Ausgestaltung des Deltaroboters bzw. Tripods, seines Aufbaus, seiner Funktionsweise und seines Bewegungsraumes sei insbesondere auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. soll deshalb an dieser Stelle verzichtet werden. Grundsätzlich könnte die Vorrichtung 41 gemäß Figur 33 bis Figur 35 auch vier gleichartige Stellarme aufweisen.

Im Folgenden ist der die Vorrichtung 41 bildende bzw. diese Vorrichtung 41 enthaltende Roboter, der gleichzeitig die Handhabungseinrichtung bzw. den Manipulator enthalt, umfasst bzw. davon einen Teil bilden kann, allgemein mit der Bezugsziffer 42 bezeichnet. Es sei darauf hingewiesen, dass der mit der Bezugsziffer 42 bezeichnete Roboter auch als Deltaroboter 42, als Deltakinematik-Roboter 42, als Parallelkinematik-Roboter 42 oder auch als Tripod 42 (vgl. hierzu Figur 33) bezeichnet sein kann.

Die Figur 33 zeigt eine schematische Perspektivansicht einer Ausführungsform einer Vorrichtung 41 bzw. des Deltakinematik-Roboters 42 zur Durchführung des erfindungsgemäßen Verfahrens. Die Vorrichtung 41 bzw. der Deltakinematik-Roboter 42 ist bspw. ausgebildet zum Greifen, Drehen und Versetzen zu Gebinden zusammengefasster Getränkebehältnisse, die in Figur 33 nicht mit dargestellt sind. Die Vorrichtung 41 bzw. der Deltakinematik-Roboter 42 kann jedoch ebenso auch zum Greifen, Drehen und Versetzen von beliebigen Artikeln oder Stückgütern eingesetzt werden.

Wie in Figur 33 zu erkennen, besitzt die Vorrichtung 41 bzw. der Deltakinematik-Roboter 42 eine obere Aufhängung 43. An der oberen Aufhängung 43 sind drei Stellarme 45 über einen jeweils zugeordneten Antrieb 48 drehbar befestigt. Die drehende Bewegung der Stellarme 45 erfolgt hierbei derart, dass ihre Drehachsen parallel zueinander verlaufen. Weiter bestehen die drei Stellarme 45 aus wenigstens zwei relativ zueinander schwenkbaren Armabschnitten 47 und 49, wobei die unteren Armabschnitte 47 bzw. Unterarme 47 jeweils aus zwei parallel zueinander orientierten Gestängen gebildet sind. Der jeweilige obere Armabschnitt 49 bzw. Oberarm 49 steht mit seinem jeweils zugeordneten Antrieb 48 in Verbindung bzw. ist an seinem jeweils zugeordneten Antrieb 48 angeflanscht. Zudem können die drei Stellarme 45 unabhängig voneinander bewegt werden. Sämtliche Antriebe 48 stehen hierzu mit einer Steuerungseinheit in Verbindung, welche die Bewegung der Stellarme 45 vorgibt und die Antriebe 48 ansteuert.

Am unteren Ende der drei Stellarme 45 steht ein Manipulator 50 mit den drei Stellarmen 45 derart in Verbindung, dass der Manipulator 50 über eine Bewegung der drei Stellarme 45 zur Handhabung von Artikeln verfahren werden kann. Die in Figur 33 nicht dargestellte Steuerungseinheit gibt daher die Bewegung der Stellarme 45 in Abhängigkeit einer für den Manipulator 50 vorgesehenen Position zum Greifen und Handhaben von Artikeln vor. Sämtliche der drei Stellarme 45 sind über einen Tragring 57 mit einer Basis 60 des Manipulators 50 mechanisch gekoppelt. Die mechanische Verbindung bzw. Koppelung zwischen dem Tragring 57 und der Basis 60 des Manipulators 50 ist derart, dass diese eine relative Verdrehung des Manipulators 50 gegenüber dem Tragring 57 erlaubt. Der Tragring 57 kann auch als Tool-Center-Point der Vorrichtung 41 bezeichnet werden.

In etwa mittig ist der Manipulator 50 an eine Linearführung 56 drehfest angeflanscht, wobei die Linearführung 56 als erste Welle 54 ausgebildet ist und somit der Manipulator 50 über die erste Welle 54 gedreht werden kann.

Weiter ist eine als zweite Welle 58 ausgebildete Betätigungseinrichtung 52 vorgesehen, mittels welcher Klemmbacken 62 und 64 zum Schließen und Öffnen angesteuert werden können. Die Drehachsen der ersten Welle 54 sowie der als zweite Welle 58 ausgebildeten Betätigungseinrichtung 52 sind identisch. Die erste Welle 54 und die zweite Welle 58 sind koaxial zueinander orientiert bzw. angeordnet. Da über die als zweite Welle 58 ausgebildete Betätigungseinrichtung 52 der Manipulator 50 bzw. die sich gegenüberliegenden Klemmbacken 62 und 64 des Manipulators 50 angesteuert werden können, sind keine pneumatischen, hydraulischen oder elektrischen Leitungsverbindungen notwendig, die zur Ansteuerung des Manipulators 50 bzw. der Klemmbacken 62 und 64 mit dem Manipulator 50 in Verbindung stehen.

Vorteilhafterweise besteht hierbei die Möglichkeit, den Manipulator 50 zusammen mit seinen Klemmbacken 62 und 64 über die erste Welle 54 um mehr als 360° zu drehen, da keine Leitungsverbindungen eine vollständige Umdrehung behindern. Hierdurch kann gegenüber aus dem Stand der Technik bekannten Vorrichtungen der Durchsatz bei Handhabung von Artikeln deutlich verbessert werden, da der Manipulator 50 nicht zurückgedreht werden muss, um diesen in eine Ausgangsorientierung zu überführen.

Der in Figur 33 dargestellte Manipulator 50 weist einreihig ausgebildete Klemm- und/oder Greifmittel, insbesondere Klemmbacken 62, 64 auf. Alternativ ist denkbar, dass ein Manipulator 50 mehrere parallele Klemm- und/oder Greifmittel aufweise, d.h. insbesondere mehrreihig aufgebaut sind. Ein zweites Klemmbackenpaar (nicht dargestellt) würde sich in dem Fall parallel zu dem ersten Klemmbackenpaar 62, 64 befinden. Gemäß einer Ausführungsform können sich die Klemmbacken des zweiten Klemmbackenpaares analog zu den beschriebenen Klemmbacken 62, 64 jeweils aufeinander zu bzw. voneinander weg bewegen, um Stückgüter zu erfassen bzw. freizugeben. Die beiden Klemmbackenpaare können beispielsweise über einen gemeinsamem Antrieb gesteuert werden. Alternativ kann vorgesehen sein, dass jedes Klemmbackenpaar einen eigenen Antrieb aufweist und das die beiden Klemmbackenpaare vorzugsweise unabhängig voneinander angesteuert werden können. Alternativ kann vorgesehen sein, dass eine mittlere Klemmbacke feststehend ausgebildet ist, so dass sich die beiden Klemmbackenpaare diese mittlere Klemmbacke teilen. Die jeweilig andere Klemmbacke der beiden Klemmbackenpaare ist somit jeweils in Richtung der feststehenden Klemmbacke bzw. in Gegenrichtung beweglich. Auch hierbei kann vorgesehen sein, dass die jeweils beweglichen Klemmbacken über einen gemeinsamen Antrieb gesteuert werden oder aber über eigene Antriebe unabhängig voneinander verfahren werden können.

Wie soeben erwähnt, können bei der in Figur 33 gezeigten Ausführungsform die beiden Klemmbacken 62 und 64 durch eine Rotation der als zweite Welle 58 ausgebildeten Betätigungseinrichtung 52 relativ zueinander verstellt werden bzw. aufeinander zu bewegt und voneinander weg bewegt werden. Die jeweilige Bewegung der Klemmbacken 62 und 64 bei Ansteuerung über die als zweite Welle 58 ausgebildete Betätigungseinrichtung 52 ist vorliegend mittels Pfeildarstellung verdeutlicht. Beide Klemmbacken 62 und 64 sind an der Basis 60 des Manipulators 50 hängend und linear beweglich befestigt. Eine Ansteuerung der Klemmbacken 62 und 64 erfolgt über mit der zweiten Welle 58 in Verbindung stehende Übersetzungsstufen eines Getriebes, die in Figur 33 nicht zu erkennen sind und ein Drehmoment der zweiten Welle 58 auf eine Stellbewegung der Klemmbacken 62 und 64 übertragen.

Die Linearführung 56 bzw. die erste Welle 54 umfasst zwei Gehäuseteile 44 und 46, die miteinander teleskopierbar in Verbindung stehen und jeweils einen Hohlraum zur Aufnahme der als zweite Welle 58 ausgebildeten Betätigungseinrichtung 52 bereitstellen. Über ein kardanisch wirkendes Gelenk ist die als zweite Welle 58 ausgebildete Betätigungseinrichtung 52 an den Manipulator 50 und an einen Aktor 70 gekoppelt.

Der Aktor 70 sitzt drehfest auf der oberen Aufhängung 43 auf. Über den Aktor 70 kann das als zweite Welle 58 ausgebildete Betätigungsglied 52 drehend bewegt werden, womit die Klemmbacken 62 und 64 des Manipulators 50 zum Greifen oder Freigeben von Artikeln verfahren werden.

Gemäß dem Verfahren muss die zweite Welle 58, welche zum Schließen und Öffnen der Klemmbacken 62 und 64 des Manipulators 50 bzw. des Greifers dient, bei einer Drehung des Greifers oder Manipulators 50 durch Betätigung der ersten Welle 54 eine Ausgleichsbewegung durchführen. Diese Ausgleichsbewegung erfolgt als Relativbewegung gegenüber der ersten Welle 54 im Gleichlauf, im Gegenlauf oder synchron. Die Richtung der Ausgleichsbewegung hat je nach gewünschter Funktion zu erfolgen. Werden z.B. die Klemmbacken 62 und 64 durch eine Drehbewegung der zweiten Welle 58 entgegen dem Uhrzeigersinn geschlossen und der Manipulator 50 bzw. der Greifer gleichzeitig durch Drehung der ersten Welle 54 entgegen dem Uhrzeigersinn gedreht, so muss die zweite Welle 58 bei der Drehung des Manipulators 50 ebenfalls eine Drehung entgegen dem Uhrzeigersinn durchführen, um zu verhindern, dass sich die Klemmbacken 62 und 64 öffnen. Analog dazu ist eine Drehung im Uhrzeigersinn umzusetzen. Die erforderlichen Drehrichtungen der Wellen 54 und 58 sind abhängig von der technischen Ausführung der Umsetzung der Drehbewegung der zweiten Welle 58 in eine Linearbewegung der Klemmbacken 62 und 64.

Die schematische Detailansicht der Figur 34 verdeutlicht einen unteren Teil der Vorrichtung 41 bzw. des Deltakinematik-Roboters 42 aus Figur 33 und zeigt hierbei insbesondere nochmals im Detail eine Ausführungsform des Manipulators 50, wie er für das erfindungsgemäße Verfahren und insbesondere zur Durchführung des erfindungsgemäßen Verfahrens vorgesehen sein und eingesetzt werden kann.

Die Klemmbacken 62 und 64 besitzen zum Greifen von Artikeln auf ihrer der jeweiligen gegenüberliegenden Klemmbacke 62 bzw. 64 zugewandten Seite mehrere biegeweiche Kontaktelemente 59. Die biegeweichen Kontaktelemente 59 werden bei einer Zustellbewegung der Klemmbacken 62 und 64 mit den jeweiligen Artikeln kraftbeaufschlagt in Anlage gebracht und setzen die jeweiligen Artikel im Wesentlichen unbeweglich am Manipulator 50 fest.

Auch zeigt die Figur 34 nochmals im Detail die unteren Armabschnitte 47 der Stellarme 45 (vgl. Figur 33), welche jeweils als Gestängekonstruktion ausgebildet sind und an ihrem unteren Ende mit dem Tragring 57 (bzw. dem sog. Tool-Center-Point) jeweils gelenkig in Verbindung stehen. Wie vorhergehend bereits erwähnt, kann der Manipulator 50 über die erste bzw. die äußere Welle 54 relativ zum Tragring 57 gedreht werden.

Die schematische Querschnittsdarstellung der Figur 35 lässt weitere Details der Vorrichtung 41 bzw. des Deltakinematik-Roboters 42 aus dem Ausführungsbeispiel gemäß Figuren 33 und 34 erkennen. In Figur 35 sind nochmals das als zweite Welle 58 ausgebildete Betätigungsglied 52 sowie die als erste Welle 54 ausgebildete Linearführung 56 zu erkennen. Die zweite Welle 58 und die erste Welle 54 besitzen eine konzentrische Orientierung und eine identische Drehachse, d.h. sie sind koaxial zueinander angeordnet. Eine Drehung des Manipulators 50 kann durch die als erste Welle 54 ausgebildete Linearführung 56 bewirkt werden, wobei die Drehachse in Figur 35 vertikal bzw. in Richtung der Bildebene orientiert ist.

Wie bereits erwähnt, sind bei Drehbewegungen des Manipulators 50, die durch Drehungen der äußeren ersten Welle 54 induziert werden, gleichsinnige oder gegensinnige Ausgleichsbewegungen der inneren zweiten Welle 58 erforderlich, um nicht eine unerwünschte Betätigung der Klemmbacken 62 und 64, d.h. deren Öffnen oder weitergehendes Schließen auszulösen. Der Umfang dieser Ausgleichsbewegung richtet sich einerseits nach der kinematischen Verknüpfung der Stellantriebe, die durch die zweite Welle 58 betätigt werden, so z.B. nach der Übersetzung dieser Stellantriebe. So können je nach Übersetzung unterschiedliche Drehwinkel der Ausgleichsbewegung erforderlich sein. Zudem richtet sich die Ausgleichsbewegung nach der Drehrichtung der ersten Welle 54, welche je nach Bedarf eine gegensinnige oder gleichsinnige Ausgleichsbewegung der zweiten Welle 58 erfordert, sollen bei der Drehung des Manipulators 50 die Klemmbacken 62 und 64 unverändert geschlossen oder geöffnet bleiben.

Ergänzend sei erwähnt, dass die Wirkverbindungen der jeweiligen Wellen 54 und 58 mit dem Manipulator 50 bzw. für die Ausgleichs- und/oder Stellbewegungen für die Klemmbacken 62 und 64 auch vertauscht werden können, sofern die entsprechenden mechanischen Voraussetzungen hierfür in den Koppelbereichen innerhalb des Tragrings 57 gegeben sind. So kann die äußere erste Welle 54 wahlweise auch die Klemmbacken 62 und 64 betätigen, d.h. öffnen und schließen, während die innere weitere Welle 58 durchaus auch für die Drehbewegungen des Manipulators 50 bzw. der rotierbaren Abschnitt der Vorrichtung 41 bzw. des Deltakinematik-Roboters 42 zuständig sein bzw. eingesetzt werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1,1a,1b: Reihe
- 2,2*: Stückgut
- 3,3a,3b: Transporteinrichtung
- 4: Erfassungsbereich
- 5: Manipulator
- 6: Horizontalfördereinrichtung
- 8: Flasche
- 9: Schrumpffolie
- 10: Handhabungsvorrichtung
- 12,12-1,12-2: Lage
- 20: Gruppiermodul
- 22: Klemmbacke
- 41: Vorrichtung
- 42: Roboter; Deltaroboter; Deltakinematik-Roboter; Parallelkinematik-Roboter; Tripod
- 43: obere Aufhängung
- 44: Gehäuseteil
- 45: Stellarm
- 46: Gehäuseteil
- 47: unterer Armabschnitt / Unterarm
- 48: Antrieb
- 49: oberer Armabschnitt / Oberarm
- 50: Manipulator
- 52: Betätigungseinrichtung
- 54: erste Welle
- 56: Linearführung
- 57: Tragring
- 58: zweite Welle
- 59: Kontaktelement
- 60: Basis
- 62: Klemmbacke
- 64: Klemmbacke
- 70: Aktor
- F,Fa,Fb: Formation
- P1 bis P13: Zielposition
- TR: Transportrichtung
- v3: Transportgeschwindigkeit
- v6: Geschwindigkeit

- I,II,III: Klemmbereich

## Patentansprüche

1. Verfahren zum Umgang mit in mindestens einer Reihe (1) hintereinander bewegten Stückgütern (2), die als geschlossene Formation (F) zu einem Erfassungsbereich (4) wenigstens eines Manipulators (5) transportiert werden,
- wobei im Erfassungsbereich (4) wenigstens zwei transportierte Stückgüter (2) mittels Klemm- und/oder Greifmitteln (22) des wenigstens einen Manipulators (5) aus der geschlossenen Formation (F) klemmend und/oder kraft- und/oder formschlüssig erfasst, von nachfolgenden Stückgütern (2) der geschlossenen Formation (F) räumlich abgetrennt und in eine definierte relative erste Zielposition (P1) und/oder Zielausrichtung gegenüber den jeweils nachfolgenden Stückgütern (2) gebracht werden,
- wobei mindestens eines der in die erste Zielposition (P1) und/oder Zielausrichtung gebrachten Stückgüter (2), das von den Klemm- und/oder Greifmitteln (22) des Manipulators (5) freigegeben wird, in der definierten relativen ersten Zielposition (P1) und/oder Zielausrichtung verbleibt,
**dadurch gekennzeichnet, dass**
- danach mindestens ein zweites der wenigstens zwei in die erste Zielposition (P1) und/oder Zielausrichtung gebrachten Stückgüter (2) mittels der weiterhin oder erneut aktivierten Klemm- und/oder Greifmittel (22) des Manipulators (5) erfasst und unter Abtrennung vom wenigstens einen ersten, in der ersten Zielposition (P1) verbleibenden Stückgut (2) in eine definierte relative zweite Zielposition (P2) und/oder Zielausrichtung verbracht wird, die beabstandet ist von der ersten Zielposition (P1).

2. Verfahren nach Anspruch 1, bei dem in einem ersten Manipulationsschritt die jeweils von den Klemm- oder Greifmitteln (22) des Manipulators (5) erfassten Stückgüter (2) durch eine Bewegung in linearer Richtung parallel oder schräg zu einer ursprünglichen Transportrichtung (TR) der geschlossenen Formation (F) und mit oder ohne überlagerte Rotation um einen Drehwinkel von 90° bis 270° in die erste Zielposition (P1) und/oder Zielausrichtung gelangen, wonach mindestens eines der vom Manipulator (5) erfassten Stückgüter (2) in unmittelbarer Folge von dieser ersten Zielposition (P1) entfernt und durch eine weitere Bewegung in linearer Richtung parallel oder schräg zur ursprünglichen Transportrichtung (TR) und mit oder ohne überlagerte Rotation um einen Drehwinkel von 90° bis 270° in die zweite Zielposition (P2) und/oder Zielausrichtung gelangt.

3. Verfahren nach Anspruch 1 oder 2, bei dem die Klemm- oder Greifmitteln (22) des Manipulators (5) zwei oder mehr hintereinander transportierte Stückgüter (2) von der geschlossenen Formation (F) erfassen und bewegen, wobei benachbarte Bereiche der Klemm- oder Greifmittel (22) zur selektiven Freigabe einzelner Stückgüter (2) an definierten Zielpositionen (P) unter gleichzeitiger Aufrechterhaltung der Erfassung und/oder Klemmung mindestens eines benachbarten Stückgutes (2) zur Beförderung in mindestens eine weitere, von der ersten Zielposition (P1) beabstandete zweite Zielposition (P2) jeweils unterschiedlich angesteuert, aktiviert und/oder bewegt werden.

4. Verfahren nach Anspruch 3, bei welchem der Erfassungsbereich (4) und/oder der Manipulator (5) mittels wenigstens eines Sensors zur Überwachung der selektiven Ansteuerung, Aktivierung und/oder Bewegung der Klemm- oder Greifmittel (22) des Manipulators (5) erfasst und überwacht wird.

5. Verfahren nach Anspruch 4, bei dem der wenigstens eine Sensor durch einen optischen Sensor, insbesondere durch eine Kamera mit nachgeschalteter Bildauswertung gebildet ist.

6. Verfahren nach einem der Ansprüche 1 bis 5, bei dem ein in einem ersten Manipulationsschritt mittels des Manipulators (5) bereits erfasstes und in eine erste Position bzw. Zwischenposition gebrachtes Stückgut (2) und/oder durch Verschieben mittels eines weiteren Stückgutes (2) in die erste Position bzw. Zwischenposition gebrachtes Stückgut (2) durch erneutes Erfassen mittels des Manipulators (5) in die definierte Zielposition (P1) und/oder Zielausrichtung gebracht wird.

7. Verfahren nach einem der Ansprüche 1 bis 6, bei welchem dem wenigstens einen ersten erfassten Stückgut (2) und dem mindestens einen zweiten Stückgut (2) gegenüber einer Transportgeschwindigkeit (v3) der geschlossenen Formation (F) wenigstens eine weitere Geschwindigkeitskomponente aufgeprägt wird.

8. Verfahren nach einem der Ansprüche 1 bis 7, bei dem zeitlich aufeinander folgend mehrmals wenigstens zwei transportierte Stückgüter (2) aus der geschlossenen Formation (F) klemmend und/oder kraft- und/oder formschlüssig erfasst, von der geschlossenen Formation (F) räumlich abgetrennt und in eine jeweilige definierte relative Zielposition (P1) und/oder Zielausrichtung gegenüber nachfolgenden Stückgütern (2) gebracht wird, woraus resultierend aus mehreren Stückgütern (2) eine Gruppierung für eine palettierfähige Lage (12) oder Teillage gebildet wird.

9. Verfahren nach einem der Ansprüche 1 bis 8, bei dem mindestens zwei Stückgüter (2) aus der geschlossenen Formation (F) klemmend und/oder kraft- und/oder
formschlüssig erfasst, von der geschlossenen Formation (F) räumlich abgetrennt und in eine jeweilige definierte erste Zielposition (P1) und/oder Zielausrichtung gegenüber nachfolgenden Stückgütern (2) gebracht werden,
wobei anschließend mindestens eines der mindestens zwei Stückgüter (2) erneut klemmend erfasst und bewegt und/oder gedreht wird und
wobei mindestens ein anderes der mindestens zwei Stückgüter (2) durch Kontakt lediglich von einer Seite her, also nicht klemmend, durch den Manipulator (5) oder durch andere Stückgüter (2) verschoben wird.

10. Vorrichtung (10) zum Umgang mit in mindestens einer Reihe (1) hintereinander bewegten Stückgütern (2), wobei die Vorrichtung (10) eine Steuerungseinrichtung zur Durchführung eines Verfahrens gemäß einem der Ansprüche 1 bis 9 umfasst, die Vorrichtung weiter umfassend:
- mindestens einen Manipulator (5) für Stückgüter (2),
- wenigstens eine Transporteinrichtung (3), über welche unmittelbar aufeinanderfolgende Stückgüter (2) der Reihe (1) annähernd ohne Beabstandung als geschlossene Formation (F) in einen Erfassungsbereich (4) des mindestens einen Manipulators (5) transportierbar sind,
- wobei der mindestens eine Manipulator (5) zum klemmenden und/oder kraft- und/oder formschlüssigen Entgegennehmen mindestens zweier Stückgüter (2) aus der mittels der wenigstens einen Transporteinrichtung (3) in seinen Erfassungsbereich (4) transportieren geschlossenen Formation (F) sowie zum Abtrennen und selektiven Überführen wenigstens jeweils eines Stückgutes (2) in mindestens zwei voneinander beabstandete unterschiedliche Zielpositionen (P1, P2) und/oder Zielausrichtungen ausgebildet ist.

11. Vorrichtung nach Anspruch 10, bei der Klemm- oder Greifmittel (22) des Manipulators (5) zwei oder mehr hintereinander transportierte Stückgüter (2) von der geschlossenen Formation (F) erfassen und bewegen können, wobei benachbarte Bereiche der Klemm- oder Greifmittel (22) zur selektiven Freigabe einzelner Stückgüter (2) an definierten Zielpositionen (P1, P2) unter gleichzeitiger Aufrechterhaltung der Erfassung und/oder Klemmung mindestens eines benachbarten Stückgutes (2) zur Beförderung in mindestens eine weitere, von der ersten Zielposition (P1) beabstandete zweite Zielposition (P2) jeweils unterschiedlich ansteuerbar, aktivierbar und/oder bewegbar sind.

12. Vorrichtung nach Anspruch 11, bei der die Klemm- oder Greifmittel (22) in wenigstens zwei separat ansteuerbare Abschnitte zur klemmenden, form- und/oder kraftschlüssigen Erfassung und/oder zur selektiven Freigabe wenigstens zweier benachbarter Stückgüter (2) unterteilt sind.

13. Vorrichtung nach Anspruch 11 oder 12, bei welcher der Erfassungsbereich (4) und/oder der Manipulator (5) mittels wenigstens eines Sensors zur Überwachung der selektiven Ansteuerung, Aktivierung und/oder Bewegung der Klemm- oder Greifmittel (22) des Manipulators (5) erfassbar und überwachbar ist, insbesondere wobei der wenigstens eine Sensor durch einen optischen Sensor, insbesondere durch eine Kamera mit nachgeschalteter Bildauswertung gebildet ist.

14. Vorrichtung nach einem der Ansprüche 10 bis 13, bei welcher der mindestens eine Manipulator (5) als Parallelkinematik-Roboter ausgebildet oder Teil eines solchen ist.

15. Vorrichtung nach einem der Ansprüche 10 bis 14, umfassend eine Steuerungseinrichtung, über welche der mindestens eine Manipulator (5) zum klemmenden und/oder kraft- und/oder formschlüssigen Erfassen der mindestens zwei Stückgüter (2), zu deren räumlicher Abtrennung von der geschlossenen Formation (F) sowie zum Bringen mindestens eines Stückgutes (2) in eine erste definierte Zielposition (P1) und/oder Zielausrichtung sowie zum Bringen mindestens eines weiteren Stückgutes (2) in eine von der ersten Zielposition (P1) beabstandete zweite definierte Zielposition (P2) und/oder Zielausrichtung ansteuerbar ist, wobei die Steuerungseinrichtung Informationen zu einer aus einer Vielzahl an Stückgütern (2) zu bildenden Gruppierung für eine palettierfähige Lage (12) aufweist bzw. abgespeichert hat, und wobei die jeweiligen Zielpositionen (P1, P2) und/oder Zielausrichtungen der Stückgüter (2) einen Teil der Informationen bilden und den jeweiligen Stückgütern (2) eine jeweilige bestimmte Lage und/oder relative Orientierung in der jeweiligen Gruppierung zuordnen.

## Claims

1. A method for handling piece goods (2) moved one after another in at least one row (1), the piece goods (2) being transported as a closed formation (F) to a seizing range (4) of at least one manipulator (5),
- wherein at least two transported piece goods (2) are seized in the seizing range (4) in a clamping and/or force-locking and/or form-locking manner from the closed formation (F) by means of clamping means and/or gripping means (22) of the at least one manipulator (5); are spatially separated from subsequent piece goods (2) of the closed formation (F); and are brought into a specified relative first target position (P1) and/or target alignment in relation to the in each instance subsequent piece goods (2),
- wherein at least one of the piece goods (2) that have been brought into the first target position (P1) and/or target alignment, which piece good (2) is released by the clamping means and/or gripping means (22) of the manipulator (5), remains in the specified relative first target position (P1) and/or target alignment,
**characterised in that**
- subsequently at least one second of the at least two piece goods (2) that have been brought into the first target position (P1) and/or target alignment is seized by means of the still or again activated clamping means and/or gripping means (22) of the manipulator (5) and, along with separation from the at least one first piece good (2) remaining in the first target position (P1), is brought into a specified relative second target position (P2) and/or target alignment that is spaced apart from the first target position (P1).

2. The method according to claim 1, in which the piece goods (2) seized in each instance in a first manipulation step by the clamping means or gripping means (22) of the manipulator (5) reach the first target position (P1) and/or target alignment by a movement in linear direction parallel or diagonal to an original transport direction (TR) of the closed formation (F) and with or without overlapping rotation by a rotation angle of 90° to 270°, whereupon at least one of the piece goods (2) seized by the manipulator (5) is immediately afterwards removed from said first target position (P1), and reaches the second target position (P2) and/or target alignment by a further movement in linear direction parallel or diagonal to the original transport direction (TR) and with or without overlapping rotation by a rotation angle of 90° to 270°.

3. The method according to claim 1 or 2, in which the clamping means or gripping means (22) of the manipulator (5) seize and move two or more consecutively transported piece goods (2) from the closed formation (F), wherein adjacent areas of the clamping means or gripping means (22) are in each instance controlled, activated, and/or moved in a different manner for the selective release of individual piece goods (2) in specified target positions (P), while simultaneously maintaining the seizing and/or clamping of at least one adjacent piece good (2) for conveying it into at least one further, second target position (P2) that is spaced apart from the first target position (P1).

4. The method according to claim 3, in which the seizing range (4) and/or the manipulator (5) is detected and monitored by means of at least one sensor for monitoring the selective control, activation, and/or movement of the clamping means or gripping means (22) of the manipulator (5).

5. The method according to claim 4, in which the at least one sensor is formed by an optical sensor, in particular, by a camera with downstream-disposed image evaluation.

6. The method according to one of the claims 1 to 5, in which a piece good (2), which has already been seized by a manipulator (5) in a first manipulation step and has been brought into a first position or intermediate position, as applicable, and/or a piece good (2), which has been brought into the first position or intermediate position, as applicable, by being shifted by means of a further piece good (2), is brought into the specified target position (P1) and/or target alignment by being seized again by means of the manipulator (5).

7. The method according to one of the claims 1 to 6, in which at least one further velocity component in relation to a transport speed (v3) of the closed formation (F) is imparted to the at least one first seized piece good (2) and to the at least one second piece good (2).

8. The method according to one of the claims 1 to 7, in which at least two transported piece goods (2) are seized in a clamping and/or force-locking and/or form-locking manner from the closed formation (F); are spatially separated from the closed formation (F); and are brought into a particular, specified relative target position (P1) and/or target alignment in relation to subsequent piece goods (2), this being repeated a number of times in succession, with the result that a group for a palletizable layer (12) or partial layer is formed from a plurality of piece goods (2).

9. The method according to one of the claims 1 to 8, in which at least two piece goods (2) are seized in a clamping and/or force-locking and/or form-locking manner from the closed formation (F); are spatially separated from the closed formation (F); and are brought into a particular specified first target position (P1) and/or target alignment in relation to subsequent piece goods (2),
wherein subsequently at least one of the at least two piece goods (2) is again seized in a clamping manner and moved and/or rotated, and
wherein at least one other of the at least two piece goods (2) is shifted by the manipulator (5) or by other piece goods (2) merely by contact from the side, that is to say, not in a clamping manner.

10. An apparatus (10) for handling piece goods (2) being moved one after another in at least one row (1), wherein the apparatus (10) comprises a control device for carrying out a method according to one of the claims 1 to 9, the apparatus further comprising:
- at least one manipulator (5) for piece goods (2);
- at least one transport device (3) by way of which immediately consecutive piece goods (2) of the row (1) are transportable nearly without spaces as closed formation (F) into a seizing range (4) of the at least one manipulator (5);
- wherein the at least one manipulator (5) is designed for the receiving of at least two piece goods (2) in a clamping and/or force-locking and/or form-locking manner from the closed formation (F) that has been transported into the manipulator (5) seizing range (4) by means of the at least one transport device (3), as well as for the separation and selective transfer of at least in each instance one piece good (2) into at least two different, spaced-apart target positions (P1, P2) and/or target alignments.

11. The apparatus according to claim 10, in which the clamping means or gripping means (22) of the manipulator (5) is able to seize and move two or more consecutively transported piece goods (2) from the closed formation (F), wherein adjacent areas of the clamping means or gripping means (22) are in each instance controllable, activatable, and/or movable in a different manner for the selective release of individual piece goods (2) in specified target positions (P1, P2), while simultaneously maintaining the seizing and/or clamping of at least one adjacent piece good (2) for conveying it into at least one further, second target position (P2) that is spaced apart from the first target position (P1).

12. The apparatus according to claim 11, in which the clamping means or gripping means (22) are subdivided into at least two separately controllable sections for receiving at least two adjacent piece goods (2) in a clamping, form-locking, and or force-locking manner and/or for the selective release thereof.

13. The apparatus according to claim 11 or 12, in which the seizing range (4) and/or the manipulator (5) is detectable and monitorable by means of at least one sensor for monitoring the selective control, activation, and/or movement of the clamping means or gripping means (22) of the manipulator (5), in particular, wherein the at least one sensor is formed by an optical sensor, in particular, by a camera with downstream-disposed image evaluation.

14. The apparatus according to one of the claims 10 to 13, in which the at least one manipulator (5) is designed as parallel kinematic robot (42) or as a part thereof.

15. The apparatus according to one of the claims 10 to 14, comprising a control device, by way of which the at least one manipulator (5) is controllable for the seizing of the at least two piece goods (2) in a clamping and/or force-locking and/or form-locking manner; for the spatial separation thereof from the closed formation (F); as well as for the bringing of at least one piece good (2) into a first specified target position (P1) and/or target alignment; as well as for the bringing of at least one further piece good (2) into a second specified target position (P2) and/or target alignment that is spaced apart from the first target position (P1), wherein the control device has information or has information stored, as applicable, on a group to be formed from a multitude of piece goods (2) for a palletizable layer (12), and wherein the particular target positions (P1, P2) and/or target alignments of the piece goods (2) form a part of the information and assign a particular, specific position and/or a relative orientation in the particular group to the particular piece goods (2).

## Revendications

1. Procédé de manipulation de produits de détail (2) qui sont déplacés les uns derrière les autres en au moins une rangée (1) et qui sont transportés en tant que formation fermée (F) vers une zone de saisie (4) dudit au moins un manipulateur (5),
- dans lequel, dans la zone de saisie (4), au moins deux produits de détail (2) transportés sont saisis par serrage et/ou par adhérence et/ou à engagement positif dans la formation fermée (F) par l'intermédiaire de moyens de serrage et/ou de préhension (22) dudit au moins un manipulateur (5), sont séparés spatialement de produits de détail (2) suivants de la formation fermée (F) et sont amenés dans une première position cible (P1) et/ou orientation cible relative(s) définie(s) par rapport aux produits de détail (2) respectivement suivants,
- dans lequel l'un au moins des produits de détail (2) amenés dans la première position cible (P1) et/ou orientation cible, qui est libéré des moyens de serrage et/ou de préhension (22) du manipulateur (5) reste dans la première position cible (P1) et/ou orientation cible relative(s) définie(s),
**caractérisé par le fait que**,
- ensuite, au moins un deuxième produit de détail (2) desdits au moins deux produits de détail (2) amenés dans la première position cible (P1) et/ou orientation cible est saisi par le biais des moyens de serrage et/ou de préhension (22) encore ou à nouveau activés du manipulateur (5) et est amené dans une deuxième position cible (P2) et/ou orientation cible relative(s) définie(s) qui est espacée de la première position cible (P1), en étant séparé dudit au moins un premier produit de détail (2) qui reste dans la première position cible (P1).

2. Procédé selon la revendication 1, dans lequel, dans une première étape de manipulation, les produits de détail (2) saisis chacun par les moyens de serrage ou de préhension (22) du manipulateur (5) atteignent la première position cible (P1) et/ou orientation cible en se déplaçant selon la direction linéaire parallèle ou oblique à une direction de transport d'origine (TR) de la formation fermée (F) et avec ou sans une rotation superposée d'un angle de rotation compris entre 90° et 270°, immédiatement après l'un au moins des produits de détail (2) saisis par le manipulateur (5) est éloigné de cette première position cible (P1) et atteint la deuxième position cible (P2) et/ou orientation cible par un autre mouvement selon la direction linéaire parallèle ou oblique à la direction de transport d'origine (TR) et avec ou sans une rotation superposée d'un angle de rotation compris entre 90° et 270.

3. Procédé selon la revendication 1 ou 2, dans lequel les moyens de serrage ou de préhension (22) du manipulateur (5) saisissent et déplacent deux ou plusieurs produits de détail (2) transportés les uns derrière les autres de la formation fermée (F), dans lequel des zones voisines des moyens de serrage ou de préhension (22) sont chacune commandées, activées et/ou déplacées de manière différente pour une libération sélective de produits de détail (2) individuels sur des positions cibles (P) définies, tout en maintenant la saisie et/ou le serrage d'au moins un produit de détail (2) voisin pour le transport dans au moins une autre deuxième position cible (P2) espacée de la première position cible (P1).

4. Procédé selon la revendication 3, dans lequel la zone de saisie (4) et/ou le manipulateur (5) est détecté(e) et surveillé(e) au moyen d'au moins un capteur destiné à surveiller la commande, l'activation et/ou le déplacement sélectifs des moyens de serrage ou de préhension (22) du manipulateur (5).

5. Procédé selon la revendication 4, dans lequel ledit au moins un capteur est formé par un capteur optique, en particulier par une caméra ayant une évaluation d'image montée en aval.

6. Procédé selon l'une quelconque des revendications 1 à 5, dans lequel un produit de détail (2) déjà saisi dans une première étape de manipulation au moyen du manipulateur (5) et amené dans une première position ou bien position intermédiaire et/ou un produit de détail (2) amené dans la première position ou bien position intermédiaire en étant déplacé au moyen d'un autre produit de détail (2) est amené dans la position cible (P1) et/ou orientation cible définie(s) par une nouvelle saisie au moyen du manipulateur (5).

7. Procédé selon l'une quelconque des revendications 1 à 6, dans lequel au moins une autre composante de vitesse est imposée audit au moins un premier produit de détail (2) saisi et audit au moins un deuxième produit de détail (2), par rapport à une vitesse de transport (v3) de la formation fermée (F).

8. Procédé selon l'une quelconque des revendications 1 à 7, dans lequel au moins deux produits de détail (2) transportés sont saisies successivement, à plusieurs reprises, par serrage et/ou par adhérence et/ou à engagement positif dans la formation fermée (F), sont séparés spatialement de la formation fermée (F) et sont amenés dans une position cible (P1) et/ou orientation cible relative(s) définie(s) respective(s) par rapport à des produits de détail (2) suivants, d'où résulte qu'un groupement pour une couche palettisable (12) ou une couche partielle est formé à partir de plusieurs produits de détails (2).

9. Procédé selon l'une quelconque des revendications 1 à 8, dans lequel au moins deux produits de détail (2) sont saisis par serrage et/ou par adhérence et/ou à engagement positif dans la formation fermée (F), sont séparés spatialement de la formation fermée (F) et sont amenés dans une première position cible (P1) et/ou orientation cible définie(s) respective(s) par rapport à des produits de détail (2) suivants,
dans lequel, ensuite, l'un au moins desdits au moins deux produits de détail (2) est à nouveau saisi et déplacé et/ou tourné par serrage, et
dans lequel au moins un autre desdits au moins deux produits de détail (2) est déplacé par contact d'un seul côté, c'est-à-dire non par serrage, par le manipulateur (5) ou par d'autres produits de détail (2).

10. Dispositif (10) de manipulation de produits de détail (2) déplacés les uns derrière les autres en au moins une rangée (1), le dispositif (10) comprenant un dispositif de commande pour la mise en œuvre d'un procédé selon l'une quelconque des revendications 1 à 9, le dispositif comprenant en outre:
- au moins un manipulateur (5) pour les produits de détail (2),
- au moins un dispositif de transport (3) par l'intermédiaire duquel des produits de détail (2) immédiatement successifs de la rangée (1) peuvent être transportés approximativement sans espacement, en tant que formation fermée (F), dans une zone de saisie (4) dudit au moins un manipulateur (5),
- dans lequel ledit au moins un manipulateur (5) est conçu pour recevoir par serrage et/ou par adhérence et/ou à engagement positif au moins deux produits de détail (2) de la formation fermée (F) transportée au moyen dudit au moins un dispositif de transport (3) dans sa zone de saisie (4), ainsi que pour séparer et transférer sélectivement au moins respectivement un produit de détail (2) dans au moins deux positions cibles (P1, P2) et/ou orientations cibles différentes espacées l'une de l'autre.

11. Dispositif selon la revendication 10, dans lequel des moyens de serrage ou de préhension (22) du manipulateur (5) peuvent saisir et déplacer deux ou plusieurs produits de détail (2) transportés les uns derrière les autres de la formation fermée (F), dans lequel des zones voisines des moyens de serrage ou de préhension (22) peuvent chacune être commandées, activées et/ou déplacées de manière différente pour une libération sélective de produits de détail (2) individuels sur des positions cibles (P1, P2) définies, tout en maintenant la saisie et/ou le serrage d'au moins un produit de détail (2) voisin pour le transport dans au moins une autre deuxième position cible (P2) espacée de la première position cible (P1).

12. Dispositif selon la revendication 11, dans lequel les moyens de serrage ou de préhension (22) sont divisés en au moins deux sections aptes à être commandées séparément et destinées à saisir par serrage, à engagement positif et/ou par adhérence et/ou à libérer de manière sélective au moins deux produits de détail (2) voisins.

13. Dispositif selon la revendication 11 ou 12, dans lequel la zone de saisie (4) et/ou le manipulateur (5) peut être détecté(e) et surveillé(e) par l'intermédiaire d'au moins un capteur destiné à surveiller la commande, l'activation et/ou le déplacement sélectifs des moyens de serrage ou de préhension (22) du manipulateur (5), dans lequel en particulier ledit au moins un capteur est formé par un capteur optique, en particulier par une caméra ayant une évaluation d'image montée en aval.

14. Dispositif selon l'une quelconque des revendications 10 à 13, dans lequel ledit au moins un manipulateur (5) est conçu en tant que robot à cinématique parallèle (42) ou fait partie d'un tel robot à cinématique parallèle.

15. Dispositif selon l'une quelconque des revendications 10 à 14, comprenant un dispositif de commande par l'intermédiaire duquel ledit au moins un manipulateur (5) peut être commandé pour saisir par serrage et/ou par adhérence et/ou à engagement positif lesdits au moins deux produits de détail (2), pour séparer spatialement ceux-ci de la formation fermée (F) ainsi que pour amener au moins un produit de détail (2) dans une première position cible (P1) et/ou orientation cible définie(s) ainsi que pour amener au moins un autre produit de détail (2) dans une deuxième position cible (P2) et/ou orientation cible définie(s), qui est espacée de la première position cible (P1), dans lequel ledit dispositif de commande présente ou bien a stocké des informations relatives à un groupement pour une couche palettisable (12), qui est à former à partir d'une pluralité de produits de détail (2), et dans lequel les positions cibles (P1, P2) et/ou orientations cibles respectives des produits de détail (2) constituent une partie des informations et associent auxdits produits de détail (2) respectifs une position déterminée et/ou une orientation relative respectives dans le groupement respectif.
